(19) Europäisches Patentamt
European Patent Office
Office européen des brevets

(11) **EP 4 020 063 A1**

(12) **EUROPEAN PATENT APPLICATION**
published in accordance with Art. 153(4) EPC

(43) Date of publication:
**29.06.2022 Bulletin 2022/26**

(21) Application number: **20870089.8**

(22) Date of filing: **06.07.2020**

(51) International Patent Classification (IPC):
**G02C 7/02** $^{(2006.01)}$ **G02C 13/00** $^{(2006.01)}$
**G06Q 30/06** $^{(2012.01)}$

(52) Cooperative Patent Classification (CPC):
**G02C 7/02; G02C 13/00; G06Q 30/06**

(86) International application number:
**PCT/JP2020/026386**

(87) International publication number:
**WO 2021/059660 (01.04.2021 Gazette 2021/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.09.2019 JP 2019175625**

(71) Applicants:
• **School Juridical Person The Kitasato Institute**
Tokyo 108-8641 (JP)
• **Itoh Optical Industrial Co., Ltd.**
Aichi 443-0041 (JP)

(72) Inventors:
• **KAWAMORITA Takushi**
Sagamihara-shi, Kanagawa 252-0373 (JP)
• **FUKUI Shinichi**
Gamagori-shi, Aichi 443-0041 (JP)
• **KATO Kazutoshi**
Gamagori-shi, Aichi 443-0041 (JP)

(74) Representative: **Regimbeau**
20, rue de Chazelles
75847 Paris Cedex 17 (FR)

(54) **METHOD FOR DESIGNING EYEGLASS LENS, DESIGNING DEVICE, SERVER DEVICE, TERMINAL DEVICE, ORDER SYSTEM, INFORMATION PROVIDING SYSTEM, AND PROGRAM**

(57) A method for designing an eyeglass lens includes an eyeball model construction step of determining a value of a parameter of each of a plurality of optical elements, and constructing an eyeball model, an aberration acquisition step of making a light ray incident at a predetermined angle with respect to a visual axis of the eyeball model to obtain an off-axis aberration in a paracentral portion and a peripheral portion of a retina of the eyeball model by an optical simulation, an aspherical coefficient value calculation step of disposing an eyeglass lens on a front side of the eyeball model and performing the optical simulation to obtain an aspherical coefficient value acting in a direction of reducing the off-axis aberration, and an aspherical shape determination step of determining an aspherical shape of the eyeglass lens based on the aspherical coefficient value.

FIG. 2

```
START
  ↓
DETERMINE REFRACTIVE SURFACE — S1
  ↓
CONSTRUCT EYE MODEL — S2
  ↓
ACQUIRE ABERRATION — S3
  ↓
CALCULATE ASPHERICAL COEFFICIENT VALUE — S4
  ↓
DETERMINE ASPHERICAL SHAPE — S5
  ↓
END
```

EP 4 020 063 A1

**Description**

[Technical Field]

The present invention relates to a method for designing an eyeglass lens, a designing device, a server device, a terminal device, an order system, an information providing method, and a program suitable for reducing an aberration that is increased in a paracentral portion and a peripheral portion of a retina outside a fovea centralis in an eye optical system. Priority is claimed on Japanese Patent Application No. 2019-175625 filed September 26, 2019, the content of which is incorporated herein by reference.

[Background Art]

As a method for designing an eyeglass lens in the related art, for example, Patent Document 1 discloses a method in which a simulation using an expression of the aspherical surface is performed and an aspherical coefficient value is set such that a target optical characteristic and thickness of the lens are obtained when any refractive surface is made to an aspherical shape.

When visually recognizing a target object, a human uses peripheral vision seen in the paracentral portion or the peripheral portion outside the fovea centralis, as well as foveal vision seen in the center portion (fovea centralis) of a retina. Therefore, in a case in which the visibility in paracentral vision or the peripheral vision is impaired, the light rays incident at a predetermined angle with respect to a visual axis are blurred in the paracentral portion or the peripheral portion of the retina, and an effective visual field is narrowed.

Exemplary examples of impaired visibility in the peripheral vision include a case in which an intraocular lens is inserted into the eye. In cataract surgery, it has been reported that, when the treatment is performed in which the crystalline lens is removed and the intraocular lens is inserted and disposed in the eye instead, the image quality in the peripheral vision deteriorates in the eye with the intraocular lens inserted as compared to a healthy eye (see, for example, Non-Patent Document 1).

In addition, even in the healthy eye, the image is not always formed at one point on the retina in the paracentral portion and the peripheral portion of the retina, and the aberration is increased in the peripheral portion of the retina outside a macula portion. Such an aberration (off-axis aberration) in the paracentral portion and the peripheral portion of the retina is considered to be one of the causes of nearsightedness progression in children.

Further, as a technique for designing an eyeglass lens suitable for a user, for example, Patent Document 2 discloses a method for optimizing the eyeglass lens using an individual eye model. According to the Patent Document 2, it is possible to design the eyeglass lens suitable for each user by using measurement data of an eye shape of each user (hereinafter, also referred to as eye data).

In addition, Patent Document 3 discloses a method and a device that manufactures an eyeglass lens, and a system and a computer program product that manufactures the eyeglass lens. In Patent Document 3, the eyeglass lens is designed using fitting data (distance between corneal apexes, forward tilt angle, warp angle, and the like) of the user.

[Citation List]

[Patent Documents]

[Patent Document 1]
Japanese Unexamined Patent Application, First Publication No. 2017-58632
[Patent Document 2]
Japanese Patent No. 6209722
[Patent Document 3]
Japanese Patent No. 4824031

[Non-Patent Document]

[Non-Patent Document 1]
Investigative ophthalmology & Visual Science (IOVS) May 2013 Vol. 54 No. 5 P. 3594-3599

[Summary of Invention]

[Technical Problem]

However, the method for designing disclosed in Patent Document 1 described above is not intended to reduce the aberration in the peripheral portion of the retina, and a method for designing the eyeglass lens capable of reducing the aberration in the paracentral portion and the peripheral portion of the retina is not disclosed.

In addition, the eye data of the user is usually measured by an ophthalmological clinic, but since this eye data is personal information, it is difficult to provide the eye data to an optician's store from the viewpoint of privacy protection. Therefore, in providing the lens more suitable for each user by using such eye data, it is required to improve the efficiency of an order procedure while protecting the privacy.

The present invention provides a method for designing an eyeglass lens, a designing device, and a program capable of reducing the aberration in the paracentral portion and the peripheral portion of the retina and improving an image-forming state on the retina.

In addition, in providing the lens suitable for each user by using the method for designing the eyeglass lens, the designing device, and the program, the present invention provides a server device, a terminal device, an order system, an information providing method, and a program capable of improving the efficiency of the order procedure while protecting the privacy of the user.

[Solution to Problem]

In order to achieve the object described above, the present invention employs the following means.

A first aspect of the present invention relates to a method for designing an eyeglass lens in which at least any one surface of a refractive surface on a front surface side and a refractive surface on a rear surface side is formed of an aspherical surface, the method including an eye model construction step of determining a value of a parameter of each of a plurality of optical elements, and constructing an eye model, an aberration acquisition step of making a light ray incident at a predetermined angle with respect to a visual axis of the eye model to obtain an off-axis aberration in a paracentral portion and a peripheral portion of a retina of the eye model by an optical simulation, an aspherical coefficient value calculation step of disposing an eyeglass lens on a front side of the eye model and performing the optical simulation to obtain an aspherical coefficient value acting in a direction of reducing the off-axis aberration, and an aspherical shape determination step of determining an aspherical shape of the eyeglass lens based on the aspherical coefficient value.

In this way, it is possible to design the eyeglass lens capable of reducing the aberration in the paracentral portion and the peripheral portion of the retina and improving an image-forming state on the retina.

A second aspect of the present invention relates to the method for designing an eyeglass lens according to the first aspect, in which, in the eye model construction step, a crystalline lens or an intraocular lens is selected as one of the optical elements to determine the value of the parameter.

In this way, it is possible to construct an appropriate eye model in accordance with whether or not the wearer uses the intraocular lens. As a result, it is possible to design an eyeglass lens capable of more accurately reducing the aberration in the paracentral portion and the peripheral portion of the retina.

A third aspect of the present invention relates to the method for designing an eyeglass lens according to the second aspect, in which, in the eye model construction step, a contact lens is further selected as one of the optical elements to determine the value of the parameter.

In this way, it is possible to construct an appropriate eye model in accordance with whether or not the wearer uses contact lens. As a result, it is possible to design an eyeglass lens capable of more accurately reducing the aberration in the paracentral portion and the peripheral portion of the retina.

A fourth aspect of the present invention relates to the method for designing an eyeglass lens according to any one of the first to third aspects, in which, in the eye model construction step, the parameters of the plurality of optical elements are determined using a value of a schematic eye modeled from biometric data.

In this way, it is possible to easily and quickly construct an eye model.

A fifth aspect of the present invention relates to the method for designing an eyeglass lens according to any one of the first to fourth aspects, in which, in the eye model construction step, the parameters of the plurality of optical elements are determined using a value obtained by measuring an eye of a wearer.

In this way, it is possible to construct an eye model that approximates the eye of the wearer. As a result, it is possible to design the eyeglass lens capable of more accurately reducing the aberration in the paracentral portion and the peripheral portion of the retina.

A sixth aspect of the present invention relates to a designing device of an eyeglass lens in which at least any one surface of a refractive surface on a front surface side and a refractive surface on a rear surface side is formed of an aspherical surface, the designing device including an eye model construction unit configured to determine the value of a parameter of each of a plurality of optical elements, and construct an eye model, an aberration acquisition unit configured to make a light ray incident at a predetermined angle with respect to a visual axis of the eye model, and obtain an off-axis aberration in a paracentral portion and a peripheral portion of a retina of the eye model by an optical simulation, an aspherical coefficient value calculation unit configured to dispose an eyeglass lens on a front side of the eye model, perform the optical simulation, and obtain an aspherical coefficient value acting in a direction of reducing the off-axis aberration, and an aspherical shape determination unit configured to determine the aspherical shape of the eyeglass lens based on the aspherical coefficient value.

A seventh aspect of the present invention relates to a program causing a computer of a designing device of an eyeglass lens in which at least any one surface of a refractive surface on a front surface side and a refractive surface on a rear surface side is formed of an aspherical surface, to execute an eye model construction step of determining a value of a parameter of each of a plurality of optical elements, and constructing an eye model, an aberration acquisition step of making a light ray incident at a predetermined angle with respect to a visual axis of the eye model to obtain an off-axis aberration in a paracentral portion and a peripheral portion of a retina of the eye model by an optical simulation, an aspherical coefficient value calculation step of disposing an eyeglass lens on a front side of the eye model and performing the optical simulation to obtain an aspherical coefficient value acting in a direction of reducing the off-axis aberration, and an aspherical shape determination step of determining an aspherical shape of the eyeglass lens based on the aspherical coefficient value.

An eighth aspect of the present invention relates to a server device including an eye data reception unit configured to receive eye data associated with a patient management number from a terminal device of an ophthalmological clinic, a lens design data reception unit configured to receive lens design data associated with the patient management number from a terminal device of an optician's store, and an order data transmission unit configured to transmit the eye data and the lens design data, which are associated with the same patient management number, to a terminal device of a lens manufacturer in association with one order management number.

In addition, a ninth aspect of the present invention relates to the server device, in which the eye data includes a state of a visual field.

In addition, a tenth aspect of the present invention relates to the server device further including a lens power reception unit configured to receive actual lens power of a lens manufactured by the lens manufacturer from the terminal device of the lens manufacturer, and a lens power transmission unit configured to transmit the lens power to the terminal device of the ophthalmological clinic in association with the patient management number.

In addition, an eleventh aspect of the present invention relates to a terminal device installed in an optician's store, the terminal device including a lens design data transmission unit configured to transmit lens design data acquired in the optician's store to a server device in association with a patient management number acquired in an ophthalmological clinic.

In addition, a twelfth aspect of the present invention relates to an order system including the server device according to any one of the eighth to tenth aspects, and the terminal device according to the eleventh aspect.

In addition, a thirteenth aspect of the present invention relates to an information providing device including a step of receiving, by a server device, eye data associated with a patient management number from a terminal device of an ophthalmological clinic, a step of receiving, by the server device, lens design data associated with the patient management number from a terminal device of an optician's store, and a step of transmitting, by the server device, the eye data and the lens design data, which are associated with the same patient management number, to a terminal device of a lens manufacturer in association with one order management number.

In addition, a fourteenth aspect of the present invention relates to a program causing a server device to execute a step of receiving eye data associated with a patient management number from a terminal device of an ophthalmological clinic, a step of receiving, by the server device, lens design data associated with the patient management number from a terminal device of an optician's store, and a step of transmitting, by the server device, the eye data and the lens design data, which are associated with the same patient management number, to a terminal device of a lens manufacturer in association with one order management number.

[Advantageous Effects of Invention]

According to the aspects described above, it is possible to obtain the eyeglass lens capable of reducing the aberration in the paracentral portion and the peripheral portion of the retina and improving the image-forming state on the retina.

In addition, according to the aspects described above, in providing a lens suitable for each user, it is possible to improve the efficiency of the order procedure while protecting the privacy of the user.

[Brief Description of Drawings]

Fig. 1A is a front view schematically showing an eyeglass lens designed by a method for designing according to a first embodiment.

Fig. 1B is a cross-sectional view schematically showing the eyeglass lens designed by the method for designing according to the first embodiment in a Y-axis direction.

Fig. 2 is a flowchart showing an example of a process in the method for designing according to the first embodiment.

Fig. 3 is a flowchart showing an example of a process in an eye model construction step according to the first embodiment.

Fig. 4 is a view showing an example of a configuration of an eye model according to the first embodiment.

Fig. 5A is a view showing a spot diagram of the eye model according to the first embodiment, and is an explanatory diagram in a case in which an aberration in a center portion of a retina is obtained.

Fig. 5B is a view showing a spot diagram of the eye model according to the first embodiment, and is an explanatory diagram in a case in which the aberration in a peripheral portion of the retina is obtained.

Fig. 6 is a first view for explaining the details of an aspherical coefficient value calculation step according to the first embodiment.

Fig. 7A is a second view for explaining the details of the aspherical coefficient value calculation step according to the first embodiment, and is an explanatory diagram in a case in which the aberration in the center portion of the retina is obtained.

Fig. 7B is a third view for explaining the details of the aspherical coefficient value calculation step according to the first embodiment, and is an explanatory diagram in a case in which the aberration in the peripheral portion of the retina is obtained.

Fig. 8A is a view showing a spot diagram in the center portion of the retina of the eye model according to Example 1 of the method for designing according to the first embodiment.

Fig. 8B is a view showing a spot diagram in the peripheral portion of the retina of the eye model according to Example 1 of the method for designing according to the first embodiment.

Fig. 9A is a view showing a spot diagram in the center portion of the retina in a case in which the eyeglass lens is disposed on a front side of the eye model according to Example 1 of the method for designing according to the first embodiment.

Fig. 9B is a view showing a spot diagram in the peripheral portion of the retina in a case in which the eyeglass lens is disposed on the front side of the eye model according to Example 1 of the method for designing according to the first embodiment.

Fig. 10 is a view showing an example of a configuration of the eye model according to Example 2 of the method for designing according to the first embodiment.

Fig. 11A is a view showing a spot diagram in the center portion of the retina of the eye model according to Example 2 of the method for designing according to the first embodiment.

Fig. 11B is a view showing a spot diagram in the peripheral portion of the retina of the eye model according to Example 2 of the method for designing according to the first embodiment.

Fig. 12A is a view showing a spot diagram in the center portion of the retina in a case in which the eyeglass lens is disposed on the front side of the eye model according to Example 2 of the method for designing according to the first embodiment.

Fig. 12B is a view showing a spot diagram in the peripheral portion of the retina in a case in which the eyeglass lens is disposed on the front side of the eye model according to Example 2 of the method for designing according to the first embodiment.

Fig. 13 is a view showing an example of a configuration of the eye model according to Example 3 of the method for designing according to the first embodiment.

Fig. 14A is a view showing a spot diagram in the center portion of the retina of the eye model according to Example 3 of the method for designing according to the first embodiment.

Fig. 14B is a view showing a spot diagram in the peripheral portion of the retina of the eye model according to Example 3 of the method for designing according to the first embodiment.

Fig. 15A is a view showing a spot diagram in the center portion of the retina in a case in which the eyeglass lens is disposed on the front side of the eye model according to Example 3 of the method for designing according to the first embodiment.

Fig. 15B is a view showing a spot diagram in the peripheral portion of the retina in a case in which the eyeglass lens is disposed on the front side of the eye model according to Example 3 of the method for designing according to the first embodiment.

Fig. 16 is a view showing an overall configuration of a designing system of the eyeglass lens according to the first embodiment.

Fig. 17 is a view showing an overall configuration of an order system according to the first embodiment.

Fig. 18 is a view showing a functional configuration of a server device according to the first embodiment.

Fig. 19 is a view showing a functional configuration of a terminal device according to the first embodiment.

Fig. 20 is a view showing a process flow of the order system according to the first embodiment.

Fig. 21 is a view showing an overall configuration of an order system according to a second embodiment.

Fig. 22 is a view showing a functional configuration of a server device according to the second embodiment.

Fig. 23 is a view showing a process flow of the order system according to the second embodiment.

Fig. 24 is a view showing an example of a hardware configuration of the server device and the terminal device according to at least one embodiment.

[Description of Embodiments]

<First Embodiment>

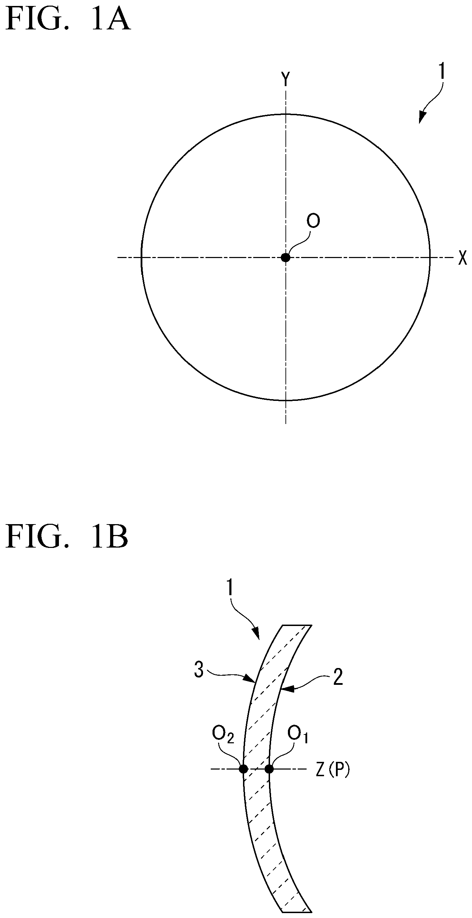

Hereinafter, a method for designing an eyeglass lens, a designing device, and an order system according to a first embodiment of the present invention will be described with reference to Figs. 1 to 20.

[Method for Designing Eyeglass Lens and Designing Device]

First, the method for designing the eyeglass lens and the designing device will be described with reference to Figs. 1 to 16.

(Construction of Eyeglass Lens)

An eyeglass lens 1 (hereinafter, also simply referred to as "lens 1") according to the present embodiment will be described with reference to Fig. 1. It should be noted that, in the following description, the front and rear, right and left, and up and down sides for a wearer wearing eyeglasses using the lens 1 are referred to as front and rear, right and left, and up and down sides in the lens 1.

Fig. 1A is a front view schematically showing the eyeglass lens designed by the method for designing according to the first embodiment.

Fig. 1B is a cross-sectional view schematically showing the eyeglass lens designed by the method for designing according to the first embodiment in a y-axis direction.

In Figs. 1A and 1B, the lens 1 is a single focus lens capable of reducing an aberration in a paracentral portion and a peripheral portion of a retina of the wearer. As shown in Fig. 1B, the lens 1 has a rear surface 2 and a front surface 3. In the lens 1, the rear surface 2 is a concave surface defined by the following expression (1), and the front surface 3 is a convex surface defined by the following expression (2). It should be noted that an axis in the front-rear direction passing through an optical center of the lens 1 (a base point $O_1$ on the rear surface 2 and a base point $O_2$ on the front surface 3) is defined as a z-axis, and a direction toward a rear side of the lens 1 is defined as a positive direction of the z-axis. In addition, the z-axis coincides with an optical axis P of the lens 1. It should be noted that, in the present embodiment, the "peripheral portion of the retina" includes a fovea centralis around the retina outside the paracentral portion of the retina, and a region outside a macula portion.

$$z = r^2/(R_1 + (R_1^2 - Kr^2)^{1/2}) + \Sigma A_n r^n \ldots (1)$$

$$z = r^2/(R_2 + (R_2^2 - Kr^2)^{1/2}) \ldots (2)$$

In the above expressions (1) and (2), r is a distance from the z-axis. That is, when considering an orthogonal coordinate system centered on the base point $O_1$ on the rear surface 2 and the base point $O_2$ on the front surface 3, an axis in the right-left direction orthogonal to the z-axis is the x-axis and an axis in the up-down direction is the y-axis, $r = (x^2 + y^2)^{1/2}$. $R_1$ and $R_2$ are radii of curvature at the apexes of the surface, and a constant K is 1. Therefore, the front surface 3 of the lens 1 is a spherical surface, and the rear surface 2 is an aspherical surface. It should be noted that $R_1$ and $R_2$ are determined by a prescribed power. In the present embodiment, an example will be described in which the prescribed power is an S power.

As shown in the expression (1), the rear surface 2 is obtained by adding an aspherical component represented by $\Sigma A_n r^n$ to a z-coordinate value of a refractive surface defined by the following expression (3) based on the prescribed power.

$$z = r^2/(R_1 + (R_1{}^2 - Kr^2)^{1/2}) \ldots (3)$$

$\Sigma A_n r^n$, which is the second term of the expression (1), is an aspherical component acting in a direction of reducing the aberration in the paracentral portion and the peripheral portion of the retina of the wearer. $A_n$ represents an aspherical coefficient for n-order r (n is a positive integer). This second term can be represented by, for example, $A_6 r^6 + A_8 r^8 + A_{10} r^{10} + A_{12} r^{12}$. In this case, the aspherical coefficient values other than the sixth, eighth, tenth, and twelfth orders are zero. That is, the refractive surface of the lens 1 on the rear surface 2 side is formed by synthesizing a power component for realizing the prescribed power and the aspherical component.

In addition, the refractive surface of the rear surface 2 can be defined by using the following expression (4) instead of the above expression (1).

$$Az^2 - 2Bz + C = 0 \ldots (4)$$

It should be noted that

$$A = K'/R_1,$$

$$B = 1 + \Sigma U_n s^{2n},$$

$$C = s^2/R_1 + \Sigma V_n s^{2n+2},$$

and

$$s^2 = r^2 + z^2.$$

The expression (4) is adaptable to a lens shape in which it is difficult to represent the shape by the expression (1). It should be noted that, in the expression (4), a conic constant K' has a relationship of K' = K - 1 with the constant K in the expression (1). In addition, $U_n$ and $V_n$ are the aspherical coefficients (n is a positive integer). $U_n$ represents the aspherical coefficient for the 2n-order s, and $V_n$ represents the aspherical coefficient for the 2n + second-order s.

For example, B and C in the expression (4) can be represented as the following expressions (5) and (6). It should be noted that, in this case, the aspherical coefficient values other than n = 1, 2, and 3 are zero.

$$B = 1 + U_1 s^2 + U_2 s^4 + U_3 s^6 \ldots (5)$$

$$C = s^2/R_1 + V_1 s^4 + V_2 s^6 + V_3 s^8 \ldots (6)$$

(Method for Designing Eyeglass Lens)

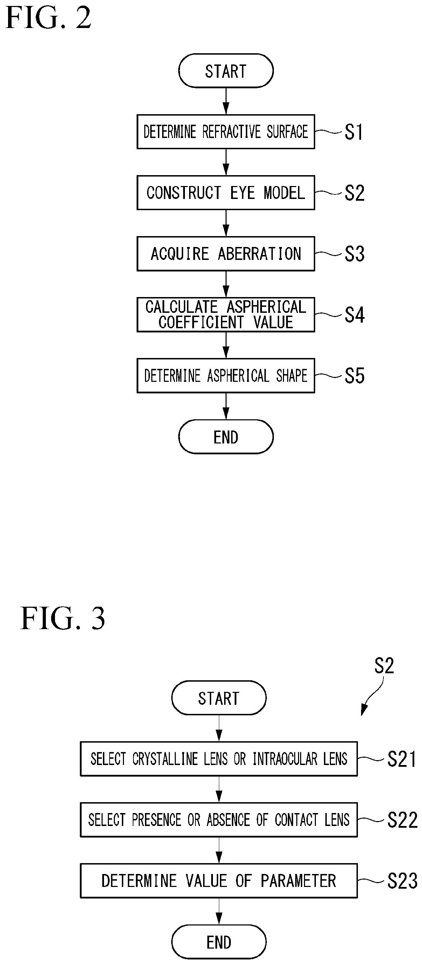

Hereinafter, the method for designing of the eyeglass lens 1 will be described in detail with reference to Fig. 2.

Fig. 2 is a flowchart showing an example of a process in the method for designing according to the first embodiment.

As shown in Fig. 2, first, a "refractive surface determination step" of determining the refractive surface of the front surface 3 and the refractive surface of the rear surface 2 of the lens 1 based on the prescribed power of the wearer is executed (step S1). It should be noted that since the method for determining the refractive surface is well known, the detailed description thereof will be omitted.

Next, an "eye model construction step" of constructing an eye model that approximates the eye of the wearer is executed (step S2).

Fig. 3 is a flowchart showing an example of a process in the eye model construction step according to the first embodiment.

Here, a specific process flow in the eye model construction step will be described with reference to Fig. 3.

The eye model is composed of a plurality of optical elements that affect an image-forming state on the retina of light rays incident on the eye (eye model). Specifically, the eye model includes a cornea, a pupil, a crystalline lens (or an intraocular lens), a retina, an aqueous humor, a vitreous body, and the like as the optical elements. In the eye model construction step according to the present embodiment, the crystalline lens or the intraocular lens is selected as one of the optical elements in accordance with whether or not the intraocular lens is inserted into the eye of the wearer to approximate a configuration of the eye of the wearer (step S21).

In addition, a contact lens may be included as the optical element of the eye model. Therefore, in the eye model construction step, the presence or absence of the contact lens (whether or not to include the contact lens as one of the optical elements constituting the eye model) is further selected (step S22).

Next, in the eye model construction step, a value of a parameter of each of the plurality of optical elements is determined (step S23).

In constructing the eye model, it is necessary to determine the values of parameters such as the shape, the refractive index, and the distance between the plurality of optical elements. For example, as the values of these parameters, the values of the schematic eye modeled from biometric data can be used. This schematic eye is, for example, a known schematic eye, such as a Gullstrand schematic eye, a Liou-Brennan schematic eye, a LeGrand schematic eye, a Walker schematic eye, a Kooijman schematic eye, or a Navarro schematic eye. The optical elements and the values of various parameters used in these model eyes can be referred to in the Handbook of Optical Systems, Vol. 4: Survey of Optical Instruments and the like.

In addition, as the value of the parameters, a value obtained by actually measuring each portion of the eye of the wearer can be used. For example, it is also possible to use values obtained by measuring the shapes of the cornea, the crystalline lens, and the retina obtained from imaging data obtained by an ocular tomography device such as an optical coherence tomography (OCT). In addition, it is also possible to use measurement data, such as a corneal shape, a pupil diameter, an anterior chamber depth, a crystalline lens shape, a visual axis length, and the like measured by an optical ocular axial length measurement device using an optical method or an ultrasound method, an ultrasound measurement/diagnostic system, and the like. It should be noted that since an optical measurement device is required to be transparent, an ultrasound measurement device is useful in a case in which the wearer has cataract or the like.

It should be noted that, in the eye model construction step, the value of the schematic eye and the measurement value of each portion of the eye of the wearer may be combined to determine the value of the parameter of each optical element.

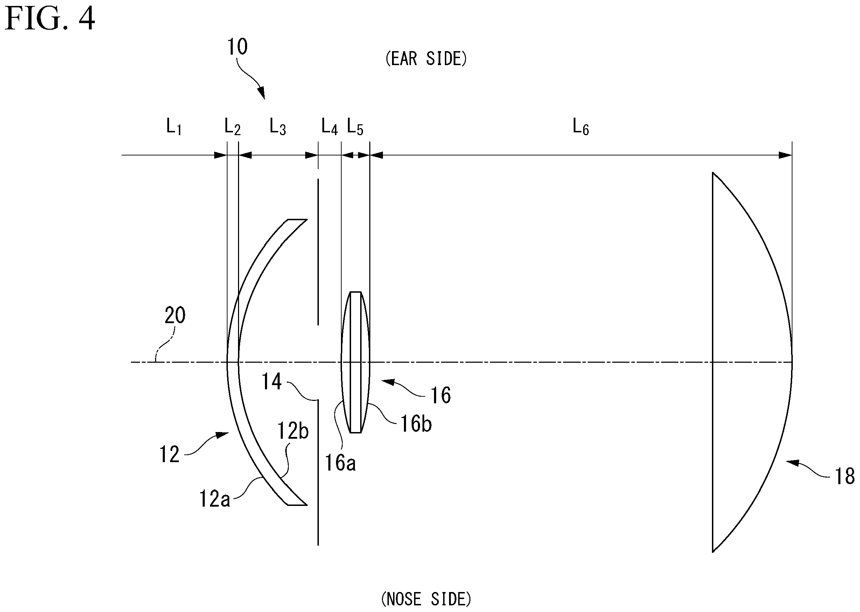

Fig. 4 is a view showing an example of a configuration of the eye model according to the first embodiment.

In Fig. 4, an upper side is the ear side of the wearer, and a lower side is a nose side.

An eye model 10 shown in Fig. 4 is composed of a cornea 12, a pupil 14, an intraocular lens 16, and a retina 18. Each element is disposed at a predetermined distance in the front-rear direction in Fig. 4 along a visual axis 20 such that its optical center is positioned on the visual axis 20. In Fig. 4, $L_1$ is the distance from an object surface (not shown) to a front surface 12a of the cornea 12. $L_2$ is the distance between the front surface 12a and a rear surface 12b of the cornea 12. $L_3$ is the distance between the rear surface 12b of the cornea 12 and the pupil 14. $L_4$ is the distance between the pupil 14 and a front surface 16a of the intraocular lens 16. $L_5$ is the distance between the front surface 16a and a rear surface 16b of the intraocular lens 16. $L_6$ is the distance between the rear surface 16b of the intraocular lens 16 and the retina 18.

For the cornea 12, the radius of curvature, the refractive index, the size (radius) in a plan view, and the conic constant on the front surface 12a and the rear surface 12b are determined as the parameters.

For the pupil 14, the refractive index, the radius of the pupil, and the conic constant are determined as the parameters.

For the intraocular lens 16, the radius of curvature, the refractive index, the size (radius) in a plan view, and the conic constant on the front surface 16a and the rear surface 16b are determined as the parameters. It should be noted that, in step S21 of Fig. 3, in a case in which the crystalline lens is selected as the optical element, similar to the intraocular lens 16, the radius of curvature, the refractive index, the size (radius) in a plan view, and the conic constant on the front surface and the rear surface of the crystalline lens are determined as the parameters.

For the retina 18, the radius of curvature, the size (radius) in a plan view, and the conic constant are determined as the parameters.

Next, returning to Fig. 2, an "aberration acquisition step" of obtaining the aberration on the retina 18 of the eye model 10 (Fig. 4) by an optical simulation is executed (step S3).

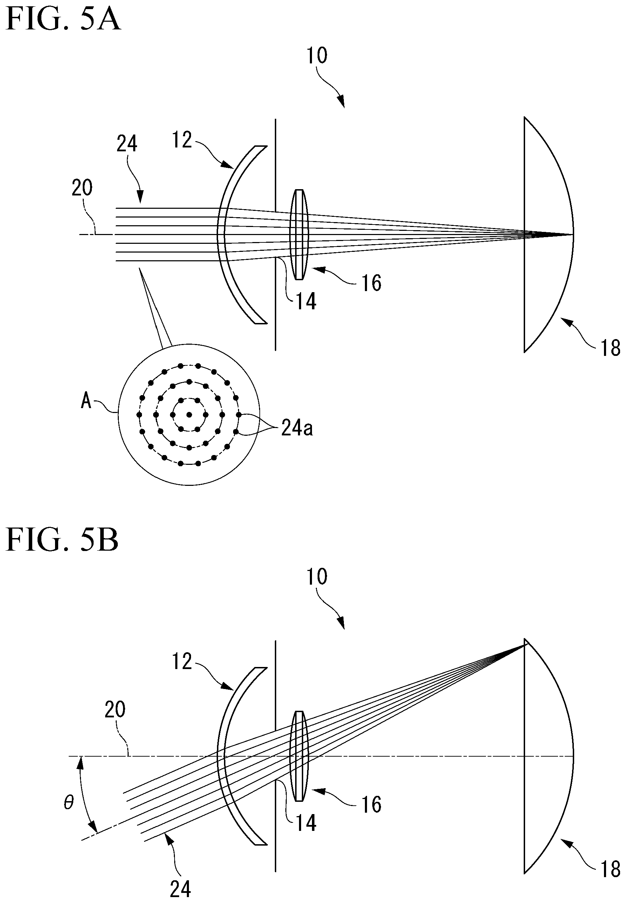

Fig. 5A is a view showing a spot diagram of the eye model according to the first embodiment, and is an explanatory diagram in a case in which the aberration in the center portion of the retina is obtained.

Fig. 5B is a view showing a spot diagram of the eye model according to the first embodiment, and is an explanatory diagram in a case in which the aberration in the peripheral portion of the retina is obtained.

Fig. 5A is an explanatory diagram in a case in which the aberration in the center portion of the retina 18 is obtained. In the optical simulation, a light ray 24 from an object surface (not shown) is incident on the eye model 10 in parallel with the visual axis 20, and the light ray 24 is traced to obtain the spot diagram obtained by plotting the arrival position of the light ray at the substantially center portion of the retina 18. Here, as the light ray 24, for example, a split light ray 24a having a wavelength of 0.588 $\mu$m is used. As shown in a partially enlarged view A, the split light rays 24a are emitted to be positioned at equal intervals in a circumferential direction on the concentric virtual circles at equal intervals in a radial direction. Therefore, the number of split light rays 24a disposed on the concentric virtual circles is increased as a direction from the center of the light rays to the outside in the radial direction is increased (in the example in the partially enlarged view A of Fig. 5A, the split light rays 24a, which are multiples of 6 such as 6, 12, 18, 24, and the like from the center of the light rays, are positioned on the concentric circles).

In the aberration acquisition step, the aberration in the center portion of the retina 18 can be obtained from the value of Root Mean Square (RMS) radius of the spot diagram when the light ray 24 is incident in parallel to the visual axis 20. The RMS radius is an index indicating the spread of the light ray 24, and it is considered that as the value of the RMS radius decreases, the aberration decreases and the image-forming state is better. In a case in which the value of the RMS radius increases, the aberration increases and the beam spot formed on the retina 18 is blurred.

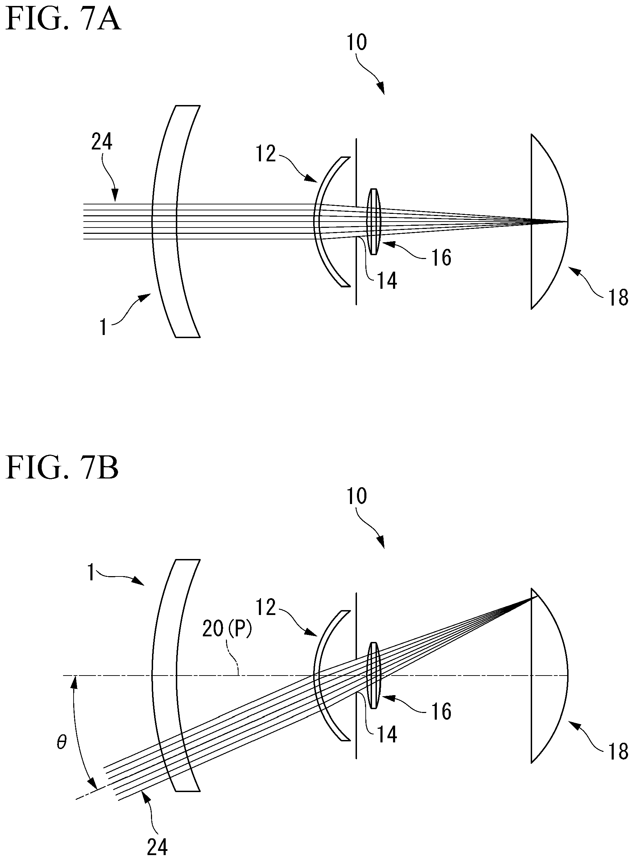

Next, in the aberration acquisition step, as shown in Fig. 5B, the light ray 24 is incident at a predetermined angle $\theta$ with respect to the visual axis 20 of the eye model 10 to obtain the spot diagram in the peripheral portion of the retina 18. It should be noted that the "peripheral portion" shown in Fig. 5B includes the paracentral portion of the retina. The same applies to the following Figs. 7B, 8B, 9B, 11B, 12B, 14B, and 15B. Moreover, the aberration (off-axis aberration) in the paracentral portion and the peripheral portion of the retina can be obtained from the value of the RMS radius of the spot diagram in this case. It should be noted that, in obtaining the off-axis aberration, it is desirable to set the angle $\theta$ between the light ray 24 and the visual axis 20 in a range of 20 degrees to 40 degrees.

Next, returning to Fig. 2, an "aspherical coefficient value calculation step" of obtaining the aspherical coefficient value acting in the direction of reducing the off-axis aberration in the eye model 10 constructed in the eye model construction step is executed (step S4).

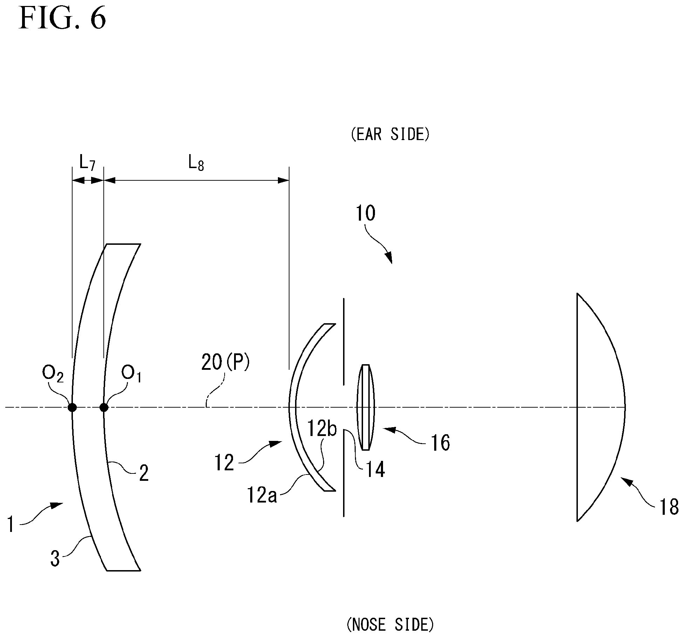

Fig. 6 is a first view for explaining the details of the aspherical coefficient value calculation step according to the first embodiment.

Fig. 7A is a second view for explaining the details of the aspherical coefficient value calculation step according to the first embodiment, and is an explanatory diagram in a case in which the aberration in the center portion of the retina is obtained.

Fig. 7B is a third view for explaining the details of the aspherical coefficient value calculation step according to the first embodiment, and is an explanatory diagram in a case in which the aberration in the peripheral portion of the retina is obtained.

First, as shown in Fig. 6, the lens 1 is disposed at a position separated by a predetermined distance from the front side (front surface 12a of the cornea 12) of the eye model 10. In this case, the lens 1 is disposed such that the optical axis P of the lens 1 coincides with the visual axis 20 of the eye model 10. In Fig. 6, $L_7$ is the distance between the front surface 3 of the lens 1 and the rear surface 2 (that is, the lens center thickness), and $L_8$ is the distance between the rear surface 2 of the lens 1 and the front surface 12a of the cornea 12 of the eye model 10.

The refractive surface of the rear surface 2 of the lens 1 disposed in this way is defined by the above aspherical expression (1). In the aspherical coefficient value calculation step, the same optical simulation as in the aberration acquisition step described above (step S3) is repeated while changing the value of the aspherical coefficient $A_n$ represented by the second term of the expression (1), and the aberration in the center portion of the retina shown in Fig. 7A and the aberration (off-axis aberration) in the peripheral portion of the retina shown in Fig. 7B are obtained. Moreover, the value of the aspherical coefficient $A_n$ capable of more reducing the off-axis aberration than from the off-axis aberration (off-axis aberration without the lens 1) acquired in the aberration acquisition step (step S3) is obtained.

In addition, in the aspherical coefficient value calculation step, in a case in which the above expression (4) is used instead of the above expression (1), the optical simulation is repeated while changing the values of the aspherical coefficients $U_n$ and $V_n$ of the expression (4). Moreover, the values of the aspherical coefficients $U_n$ and $V_n$ capable of more reducing the off-axis aberration than from the off-axis aberration (off-axis aberration without the lens 1) acquired in the aberration acquisition step (step S3) are obtained.

Specifically, in the aspherical coefficient value calculation step, the value of the aspherical coefficient $A_n$ capable of reducing the off-axis aberration by a predetermined value or more is obtained from among a plurality of aspherical coefficients $A_n$. For example, in a case in which the angle $\theta$ between the light ray 24 and the visual axis is 20 degrees or more, it is desirable that the off-axis aberration is reduced by 1.5 $\mu$m or more in the RMS radius. In this case, the value of the aspherical coefficient $A_n$ (or the values of the aspherical coefficients $U_n$ and $V_n$) capable of more reducing the off-axis aberration by 1.5 $\mu$m or more than the off-axis aberration acquired in the aberration acquisition step (step S3) is obtained. It should be noted that there are a plurality of aspherical coefficients capable of reducing the off-axis aberration by a predetermined value or more, the value of the aspherical coefficient capable of reducing the off-axis aberration most may be obtained.

Next, returning to Fig. 2, an "aspherical shape determination step" of determining a final shape (aspherical shape) of the refractive surface of the rear surface 2 of the lens 1 based on the value of the aspherical coefficient $A_n$ (or the values of the aspherical coefficients $U_n$ and $V_n$) obtained in the aspherical coefficient value calculation step is executed (step S5). In the present embodiment, as shown in the above expression (1), the shape of the refractive surface of the rear surface 2 of the lens 1 is obtained by adding the aspherical component (represented by $\Sigma A_n r^n$) obtained from the value of the aspherical coefficient $A_n$ to the refractive surface (z-coordinate value of the refractive surface defined based on the prescribed power) of the rear surface 2 of the lens 1 determined in the refractive surface determination step (step S1). Therefore, the final shape (aspherical shape) of the refractive surface of the rear surface of the lens 1 can be uniquely determined when the value of the aspherical coefficient is determined. The same applies to when the expression (4) is used.

As described above, by designing the eyeglass lens 1 using the method for designing according to the present embodiment, it is possible to reduce the off-axis aberration in the paracentral portion and the peripheral portion of the retina of the wearer, and it is possible to improve the image-forming state on the retina. Here, it is desirable that the eye model 10 to be constructed approximates the eye of the wearer, and it is possible to appropriately change the value of the optical element to be selected and its parameter. In addition, it is possible to appropriately change the expression that defines the aspherical surface of the lens or the aspherical coefficient value thereof.

As described above, as the effect of improving the off-axis aberration, it is desirable that the off-axis aberration in a case in which the light ray 24 is incident at an angle of 20 degrees or more with respect to the visual axis 20 of the eye model 10 is reduced by 1.5 $\mu$m or more in the RMS radius. A specific example thereof will be described with reference to the following examples.

(Example 1)

Example 1 is an example in which the eye model 10 including a single focus intraocular lens 16 is constructed, and a single focus lens (eyeglass lens 1) capable of reducing the off-axis aberration of the eye model 10 is designed. The eye model 10 according to the present example is obtained by measuring data on the pupil of the wearer and the intraocular lens 16 and adding the measured data to the data on the Liou-Brennan schematic eye. The configuration of the eye model 10 according to the present example is the same as that of the eye model 10 shown in Fig. 4.

In addition, in the present example, the eye model 10 is constructed by using the optical elements and values of the parameters shown in Table 1 below by the eye model construction step described above (step S2 of Fig. 2). It should be noted that a "distance to the next surface" shown in Table 1 is the distance from the front surface to the rear surface of one optical element, or the distance from the rear surface of one optical element to the front surface of the other optical element positioned rearward, and is the distance corresponding to $L_1$ to $L_6$ shown in Fig. 4. For example, the "distance to the next surface of 0.50 mm" of "front surface of the cornea" in Table 1 means that the distance ($L_2$ shown in Fig. 4) to the "rear surface of the cornea", which is the next surface, is 0.5 mm.

[Table 1]

| | RADIUS OF CURVATURE (mm) | DISTANCE TO NEXT SURFACE (mm) | REFRACTIVE INDEX | RADIUS (mm) | CONIC |
|---|---|---|---|---|---|
| OBJECT SURFACE | INFINITE | 10000000000 | -- | -- | -- |
| FRONT SURFACE OF CORNEA | 7.77 | 0.50 | 1.376 | 6.00 | -0.180 |
| REAR SURFACE OF CORNEA | 6.40 | 3.16 | 1.336 | 6.00 | -0.600 |
| PUPIL | INFINITE | 1.32 | 1.336 | 1.50 | 0.000 |
| FRONT SURFACE OF INTRAOCULAR LENS | 11.00 | 1.20 | 1.458 | 3.00 | 0.000 |

(continued)

| | RADIUS OF CURVATURE (mm) | DISTANCE TO NEXT SURFACE (mm) | REFRACTIVE INDEX | RADIUS (mm) | CONIC |
|---|---|---|---|---|---|
| REAR SURFACE OF INTRAOCULAR LENS | -12.80 | 17.75 | 1.336 | 3.00 | 0.000 |
| RETINA | -12.00 | -- | -- | 8.05 | 0.000 |

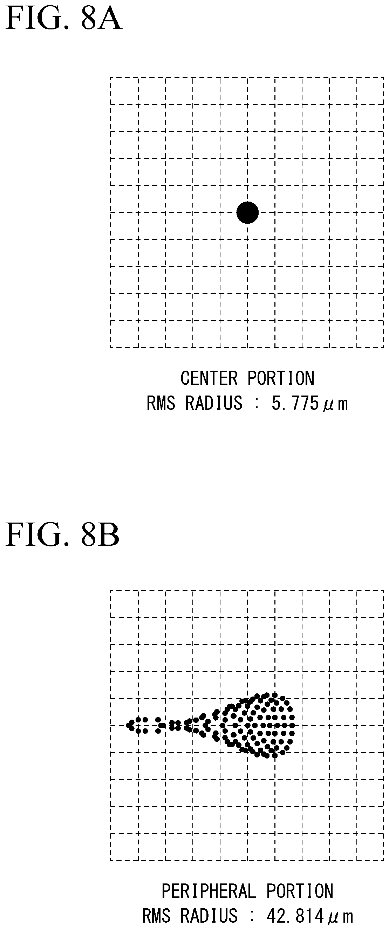

Fig. 8A is a view showing a spot diagram in the center portion of the retina of the eye model according to Example 1 of the method for designing according to the first embodiment.

Fig. 8B is a view showing a spot diagram in the peripheral portion of the retina of the eye model according to Example 1 of the method for designing according to the first embodiment.

Figs. 8A and 8B are the spot diagrams in the center portion and the peripheral portion of the retina 18 in the eye model 10 obtained by the optical simulation by the aberration acquisition step described above (step S3 of Fig. 2). The example of Fig. 8B is a view of the spot diagram of the peripheral portion (peripheral portion closer to the ear side than the center portion) of the retina 18 obtained in a case in which the light ray 24 is incident at an angle of 31 degrees with respect to the visual axis 20 of the eye model 10. As shown in Figs. 8A and 8B, it can be seen that the value of the RMS radius is as large as 42.814 $\mu$m in the peripheral portion while the center portion is 5.775 $\mu$m, and the aberration of the eye model 10 in the peripheral portion is particularly larger than that in the center portion.

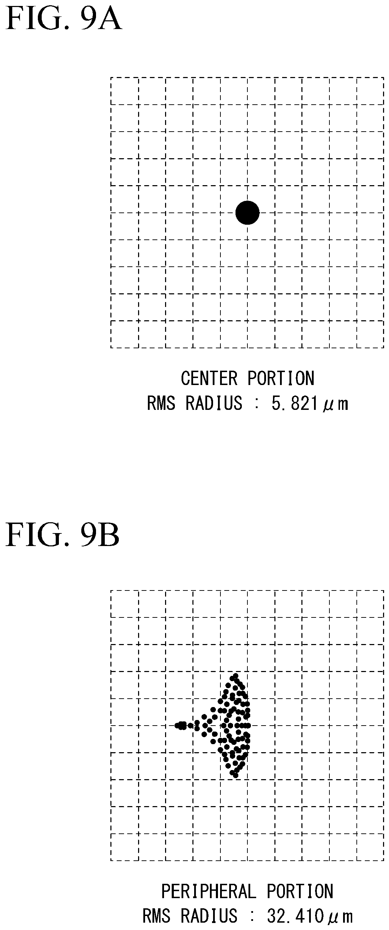

It should be noted that a dotted line in Figs. 8A and 8B is a grid with a pitch of 25 $\mu$m. In addition, the up-down direction indicates the up-down direction of the wearer, the left direction indicates the nose side, and the right direction indicates the ear side. The same applies to Figs. 9A, 9B, 11A, 11B, 12A, 12B, 14A, 14B, 15A, and 15B.

Next, the lens 1 capable of reducing the aberration in the paracentral portion and the peripheral portion of the retina in a state of being disposed on the front side of the cornea 12 of the eye model 10 is designed in accordance with the method for designing of the present embodiment. It should be noted that the lens 1 designed in the present example is the single focus lens in which a lens power is S0.00D and the rear surface 2 is formed of the aspherical refractive surface.

The values of the parameters of the eye model 10 and the lens 1 are shown in Table 2 below. The "distance to the next surface of 2.00 mm" of the "front surface of the eyeglass lens" shown in Table 2 is a distance corresponding to $L_7$ in Fig. 6 (distance between the front surface 3 and the rear surface 2 of the lens 1), and the "distance to the next surface of 12.00 mm" of the "rear surface of the eyeglass lens" is a distance corresponding to $L_8$ in Fig. 6 (distance between the rear surface 2 of the lens 1 and the front surface 12a of the cornea 12 of the eye model 10).

[Table 2]

| | RADIUS OF CURVATURE (mm) | DISTANCE TO NEXT SURFACE (mm) | REFRACTIVE INDEX | RADIUS (mm) | CONIC |
|---|---|---|---|---|---|
| OBJECT SURFACE | INFINITE | 10000000000 | -- | -- | -- |
| FRONT SURFACE OF EYEGLASS LENS | 125.62 | 2.00 | 1.604 | 18.00 | 0.000 |
| REAR SURFACE OF EYEGLASS LENS | 124.85 | 12.00 | 1.000 | 18.00 | 0.000 |
| FRONT SURFACE OF CORNEA | 7.77 | 0.50 | 1.376 | 6.00 | -0.180 |
| REAR SURFACE OF CORNEA | 6.40 | 3.16 | 1.336 | 6.00 | -0.600 |
| PUPIL | INFINITE | 1.32 | 1.336 | 1.50 | 0.000 |
| FRONT SURFACE OF INTRAOCULAR LENS | 11.00 | 1.2 | 1.458 | 3.00 | 0.000 |
| REAR SURFACE OF INTRAOCULAR LENS | -12.80 | 17.75 | 1.336 | 3.00 | 0.000 |
| RETINA | -12.00 | -- | -- | 8.05 | 0.000 |

As shown in Table 2 and Fig. 6, by the aspherical coefficient value calculation step described above (step S4 of Fig. 2), the optical simulation is repeated in a state in which the lens 1 is disposed on the front side of the eye model 10, and the aspherical coefficients $A_6$, $A_8$, $A_{10}$, and $A_{12}$ of the lens acting in the direction of reducing the off-axis aberration are obtained as follows.

$A_6$: 2.852E-08

$A_8$: 5.338E-11

$A_{10}$: -8.440E-13

$A_{12}$: 1.574E-15

It should be noted that, in the aspherical coefficient, E and the numbers on the right side of E represent powers with 10 as the radix and the number on the right side of E as the exponent.

In addition, by the aspherical shape determination step described above (step S5 in Fig. 2), the aspherical shape of the rear surface 2 of the lens 1 is determined based on the aspherical coefficients $A_6$, $A_8$, $A_{10}$, and $A_{12}$, and the above expression (1).

Fig. 9A is a view showing a spot diagram in the center portion of the retina in a case in which the eyeglass lens is disposed on the front side of the eye model according to Example 1 of the method for designing according to the first embodiment.

Fig. 9B is a view showing a spot diagram in the peripheral portion of the retina in a case in which the eyeglass lens is disposed on the front side of the eye model according to Example 1 of the method for designing according to the first embodiment.

Here, the RMS radii of the spot diagram with and without the lens 1 designed as described above are compared. In a case in which the lens 1 is not present, the RMS radius is 5.775 $\mu$m in the center portion and 42.814 $\mu$m in the peripheral portion, as shown in Figs. 8A and 8B. In contrast to the aforementioned case, in a case in which the lens 1 is disposed on the front side, the RMS radius is 5.821 $\mu$m in the center portion and 32.410 $\mu$m in the peripheral portion, as shown in Figs. 9A and 9B. That is, by disposing the lens 1 according to the present example, the aberration in the paracentral portion and the peripheral portion of the retina 18 can be reduced by 10.404 $\mu$m in the RMS radius. When considering that there is a report that a person can distinguish a difference in the aberration of about 0.2 $\mu$m, it can be seen that there is a greatly improved effect on the eye model 10 including the intraocular lens 16.

(Example 2)

Example 2 is an example in which the eye model including the crystalline lens is constructed, and the single focus lens (eyeglass lens) capable of reducing the off-axis aberration of the eye model is designed.

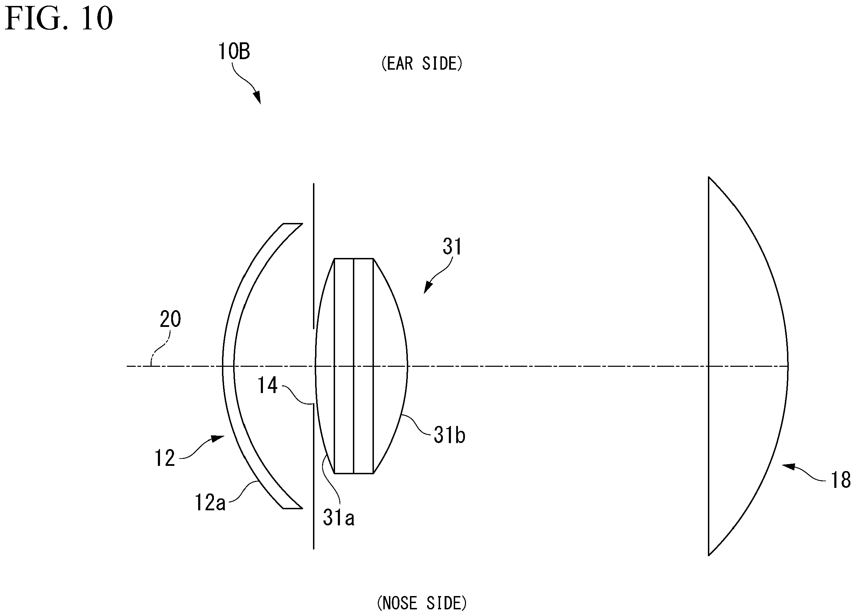

Fig. 10 is a view showing an example of a configuration of the eye model according to Example 2 of the method for designing according to the first embodiment.

As shown in Fig. 10, an eye model 10B according to the present example is composed of the cornea 12, the pupil 14, a crystalline lens 31, and the retina 18. In addition, the crystalline lens 31 has a crystalline lens front surface 31a and a crystalline lens rear surface 31b.

The eye model 10B is obtained by measuring data on the pupil of the wearer and adding the measured data to the data on the Liou-Brennan schematic eye. In addition, in the present example, the eye model 10B is constructed by using the optical elements and values of the parameters shown in Tables 3 and 4 below by the eye model construction step described above (step S2 of Fig. 2).

[Table 3]

|  | RADIUS OF CURVATURE (mm) | DISTANCE TO NEXT SURFACE (mm) | REFRACTIVE INDEX | RADIUS (mm) | CONIC |
|---|---|---|---|---|---|
| OBJECT SURFACE | INFINITE | 10000000000 | -- | -- | -- |
| FRONT SURFACE OF CORNEA | 7.77 | 0.50 | 1.376 | 6.00 | -0.180 |
| REAR SURFACE OF CORNEA | 6.40 | 3.16 | 1.336 | 6.00 | -0.600 |

(continued)

| | RADIUS OF CURVATURE (mm) | DISTANCE TO NEXT SURFACE (mm) | REFRACTIVE INDEX | RADIUS (mm) | CONIC |
|---|---|---|---|---|---|
| PUPIL | INFINITE | 0.00 | 1.336 | 1.50 | 0.000 |
| FRONT SURFACE OF CRYSTALLINE LENS | 12.40 | 1.59 | -- | 4.50 | -0.940 |
| REFRACTIVE INDEX DISTRIBUTION | INFINITE | 2.43 | -- | 4.50 | 0.000 |
| REAR SURFACE OF CRYSTALLINE LENS | -8.10 | 16.27 | 1.336 | 4.50 | 0.960 |
| RETINA | -12.00 | -- | -- | 8.04 | 0.000 |

[Table 4]

| | $n_0$ | $n_{r2}$ | $n_{r4}$ | $n_{r6}$ | $n_{z1}$ | $n_{z2}$ | $n_{z3}$ |
|---|---|---|---|---|---|---|---|
| FRONT SURFACE OF CRYSTALLINE LENS | 1.368 | -0.0020 | 0 | 0 | 0.0491 | -0.0154 | 0 |
| REFRACTIVE INDEX DISTRIBUTION | 1.407 | -0.0020 | 0 | 0 | 0.0000 | -0.0066 | 0 |

Table 4 is a parameter representing the refractive index distribution of the crystalline lens 31 by the following expression (7). In the expression (7), a refractive index n of the crystalline lens 31 at positions of x, y, and z is represented.

$$n = n_0 + n_{r2}r^2 + n_{r4}r^4 + n_{r6}r^6 + n_{z1}z + n_{z2}z^2 + n_{z3}z^3 \ldots (7)$$

It should be noted that $r^2 = x^2 + y^2$.

Since the refractive index of the crystalline lens 31 is changed inside, in a case of the eye model 10B, in the aberration acquisition step and the aspherical coefficient value calculation step described above (steps S3 and S4 of Fig. 2), the optical simulation is performed based on the refractive index distribution inside the crystalline lens 31, which is represented by Table 4 and the expression (7).

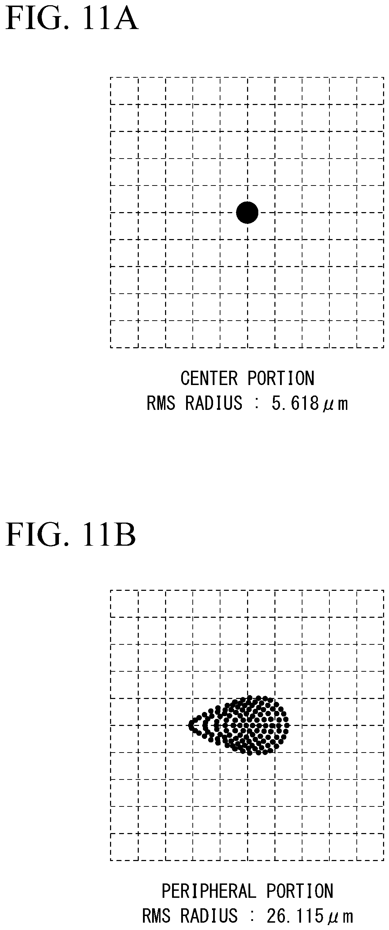

Fig. 11A is a view showing a spot diagram in the center portion of the retina of the eye model according to Example 2 of the method for designing according to the first embodiment.

Fig. 11B is a view showing a spot diagram in the peripheral portion of the retina of the eye model according to Example 2 of the method for designing according to the first embodiment.

Figs. 11A and 11B are the spot diagrams in the center portion and the peripheral portion of the retina 18 in the eye model 10B obtained by the optical simulation by the aberration acquisition step described above (step S3 of Fig. 2). The example of Fig. 11B is a view of the spot diagram of the peripheral portion (peripheral portion closer to the ear side than the center portion) of the retina 18 obtained in a case in which the light ray 24 is incident at an angle of 31 degrees with respect to the visual axis 20 of the eye model 10B. As shown in Figs. 11A and 11B, it can be seen that the value of the RMS radius is as large as 26.155 $\mu$m in the peripheral portion while the center portion is 5.618 $\mu$m, and the aberration in the peripheral portion is larger than that in the center portion even in the eye model 10B including the crystalline lens 31.

Next, a lens 1B (not shown) capable of reducing the aberration in the paracentral portion and the peripheral portion of the retina in a state of being disposed on the front side of the eye model 10B is designed in accordance with the method for designing of the present embodiment. It should be noted that the lens 1B designed in the present example is the single focus lens in which the lens power is S0.00D and the rear surface 2 is formed of the aspherical refractive surface, and the shape of the rear surface 2 is defined by using the above expression (4). The values of the parameters of the eye model 10B and the lens 1B are shown in Table 5 below.

[Table 5]

| | RADIUS OF CURVATURE (mm) | DISTANCE TO NEXT SURFACE (mm) | REFRACTIVE INDEX | RADIUS (mm) | CONIC |
|---|---|---|---|---|---|
| OBJECT SURFACE | INFINITE | 10000000000 | -- | -- | -- |
| FRONT SURFACE OF EYEGLASS LENS | 125.62 | 2.00 | 1.604 | 18.00 | 0.000 |
| REAR SURFACE OF EYEGLASS LENS | 124.85 | 12.00 | 1.000 | 18.00 | 0.000 |
| FRONT SURFACE OF CORNEA | 7.77 | 0.50 | 1.376 | 6.00 | -0.180 |
| REAR SURFACE OF CORNEA | 6.40 | 3.16 | 1.336 | 6.00 | -0.600 |
| PUPIL | INFINITE | 0.00 | 1.336 | 1.50 | 0.000 |
| FRONT SURFACE OF CRYSTALLINE LENS | 12.40 | 1.59 | 1.420 | 4.50 | -0.940 |
| REFRACTIVE INDEX DISTRIBUTION | INFINITE | 2.43 | -- | 4.50 | 0.000 |
| REAR SURFACE OF CRYSTALLINE LENS | -8.10 | 16.27 | 1.336 | 4.50 | 0.960 |
| RETINA | -12.00 | -- | -- | 8.04 | 0.000 |

By the aspherical coefficient value calculation step described above (step S4 of Fig. 2), the optical simulation is repeated in a state in which the lens 1B is disposed on the front side of the eye model 10B, and the aspherical coefficients $U_2$, $U_3$, $V_2$, and $V_3$ of the lens 1B acting in the direction of reducing the off-axis aberration are obtained as follows.

$U_2$: -2.837E-05

$U_3$: -3.883E-07

$V_2$: -1.279E-07

$V_3$: -3.962E-09

In addition, by the aspherical shape determination step described above (step S5 in Fig. 2), the aspherical shape of the rear surface 2 of the lens 1B is determined based on the aspherical coefficients $U_2$, $U_3$, $V_2$, and $V_3$, and the above expression (4).

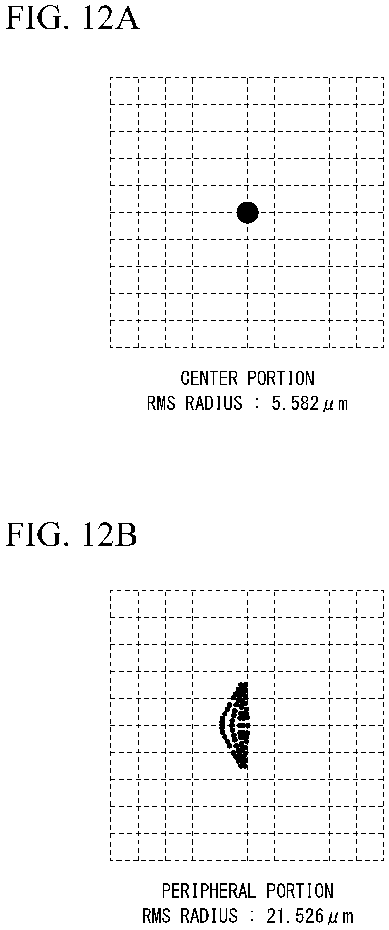

Fig. 12A is a view showing a spot diagram in the center portion of the retina in a case in which the eyeglass lens is disposed on the front side of the eye model according to Example 2 of the method for designing according to the first embodiment.

Fig. 12B is a view showing a spot diagram in the peripheral portion of the retina in a case in which the eyeglass lens is disposed on the front side of the eye model according to Example 2 of the method for designing according to the first embodiment.

Here, the RMS radii of the spot diagram with and without the lens 1B designed as described above are compared. In a case in which the lens 1B is not present, the RMS radius is 5.618 $\mu$m in the center portion and 26.115 $\mu$m in the peripheral portion, as shown in Figs. 11A and 11B. In contrast to the aforementioned case, in a case in which the lens 1B is disposed on the front side, the RMS radius is 5.582 $\mu$m in the center portion and 21.526 $\mu$m in the peripheral portion, as shown in Figs. 12A and 12B. That is, by disposing the aspherical lens 1B of the present example, the aberration in the peripheral portion of the retina 18 can be reduced by 4.589 $\mu$m in the RMS radius.

(Example 3)

Example 3 is an example in which the eye model including the contact lens is constructed, and the single focus lens (eyeglass lens) that reduces the off-axis aberration of the eye model is designed.

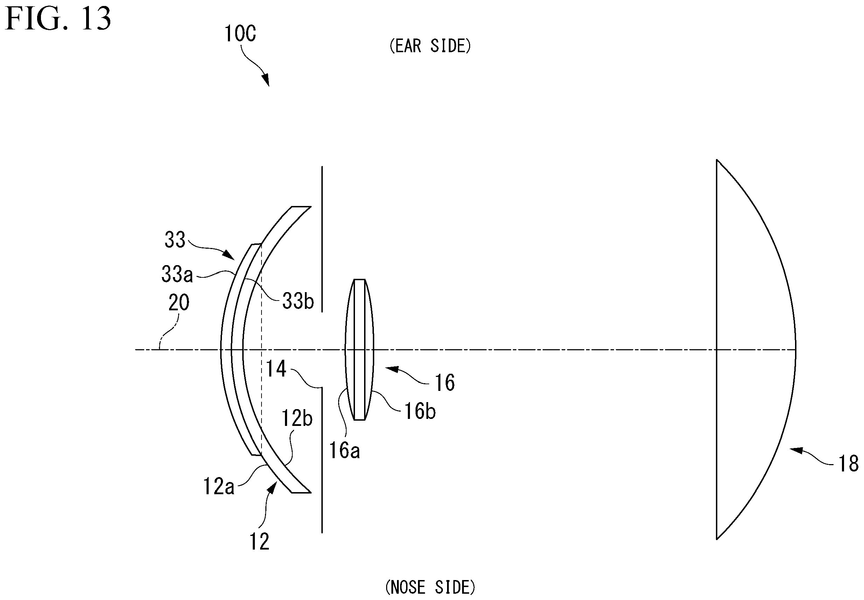

Fig. 13 is a view showing an example of a configuration of the eye model according to Example 3 of the method for designing according to the first embodiment.

As shown in Fig. 13, in an eye model 10C according to the present example, in addition to the cornea 12, the pupil 14, the intraocular lens 16, and the retina 18, a contact lens 33 is further disposed on the front surface 12a side of the cornea 12. In addition, the contact lens 33 has a contact lens front surface 33a and a contact lens rear surface 33b.

The eye model 10C is obtained by measuring data on the pupil 14, the intraocular lens 16, and the contact lens 33 of the wearer and adding the measured data to the data of the Navarro schematic eye. In addition, in the present example, the eye model 10C is constructed by using the optical elements and values of the parameters shown in Table 6 below by the eye model construction step described above (step S2 of Fig. 2).

[Table 6]

| | RADIUS OF CURVATURE (mm) | DISTANCE TO NEXT SURFACE (mm) | REFRACTIVE INDEX | RADIUS (mm) | CONIC |
|---|---|---|---|---|---|
| OBJECT SURFACE | INFINITE | 10000000000 | -- | -- | -- |
| FRONT SURFACE OF CONTACT LENS | 7.77 | 0.16 | 1.445 | 4.40 | 0.000 |
| REAR SURFACE OF CONTACT LENS | 7.72 | 0.007 | 1.337 | 4.40 | -0.260 |
| FRONT SURFACE OF CORNEA | 7.72 | 0.55 | 1.367 | 6.00 | -0.260 |
| REAR SURFACE OF CORNEA | 6.50 | 3.05 | 1.337 | 6.00 | 0.000 |
| PUPIL | INFINITE | 0.00 | 1.337 | 1.50 | 0.000 |
| FRONT SURFACE OF INTRAOCULAR LENS | 12.00 | 1.20 | 1.458 | 3.00 | 0.000 |
| REAR SURFACE OF INTRAOCULAR LENS | -12.80 | 17.75 | 1.337 | 3.00 | 0.000 |
| RETINA | -12.00 | -- | -- | 8.04 | 0.000 |

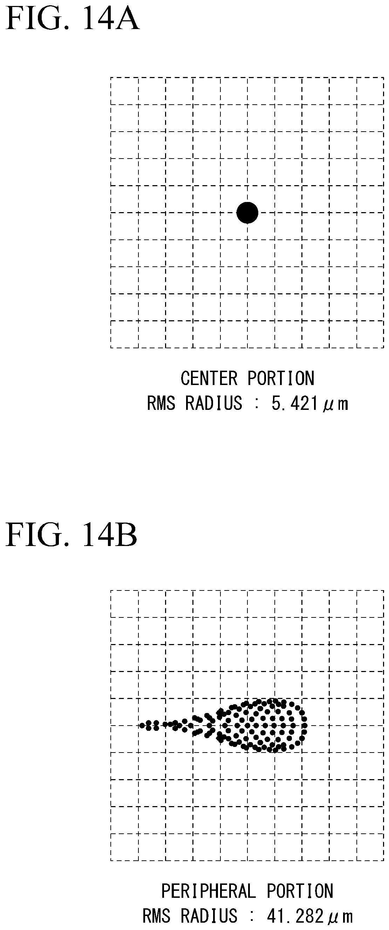

Fig. 14A is a view showing a spot diagram in the center portion of the retina of the eye model according to Example 3 of the method for designing according to the first embodiment.

Fig. 14B is a view showing a spot diagram in the peripheral portion of the retina of the eye model according to Example 3 of the method for designing according to the first embodiment.

Figs. 14A and 14B are the spot diagrams in the center portion and the peripheral portion of the retina 18 in the eye model 10C obtained by the optical simulation by the aberration acquisition step described above (step S3 of Fig. 2). The example of Fig. 14B is a view of the spot diagram of the peripheral portion (peripheral portion closer to the ear side than the center portion) of the retina 18 obtained in a case in which the light ray 24 is incident at an angle of 31 degrees with respect to the visual axis 20 of the eye model 10B. As shown in Figs. 14A and 14B, it can be seen that the value of the RMS radius is as large as 41.282 $\mu$m in the peripheral portion while the center portion is 5.421 $\mu$m, and the aberration in the peripheral portion is particularly larger than that in the center portion.

Next, a lens 1C (not shown) capable of reducing the aberration in the paracentral portion and the peripheral portion of the retina in a state of being disposed on the front side of the eye model 10C is designed in accordance with the method for designing of the present embodiment. It should be noted that the lens 1C to be designed is the single focus lens in which a lens power is S0.00D and the rear surface 2 is formed of the aspherical refractive surface represented by the above expression (1). The values of the parameters of the eye model 10C and the lens 1C are shown in Table 7 below.

[Table 7]

| | RADIUS OF CURVATURE (mm) | DISTANCE TO NEXT SURFACE (mm) | REFRACTIVE INDEX | RADIUS (mm) | CONIC |
|---|---|---|---|---|---|
| OBJECT SURFACE | INFINITE | 10000000000 | -- | -- | -- |
| FRONT SURFACE OF EYEGLASS LENS | 125.62 | 2.00 | 1.604 | 13.00 | 0.000 |
| REAR SURFACE OF EYEGLASS LENS | 124.85 | 12.00 | 1.000 | 13.00 | 0.000 |
| FRONT SURFACE OF CONTACT LENS | 7.77 | 0.16 | 1.445 | 4.40 | 0.000 |
| REAR SURFACE OF CONTACT LENS | 7.72 | 0.007 | 1.337 | 4.40 | -0.260 |
| FRONT SURFACE OF CORNEA | 7.72 | 0.55 | 1.367 | 6.00 | -0.260 |
| REAR SURFACE OF CORNEA | 6.50 | 3.05 | 1.337 | 6.00 | 0.000 |
| PUPIL | INFINITE | 0.00 | 1.337 | 1.50 | 0.000 |
| FRONT SURFACE OF INTRAOCULAR LENS | 12.00 | 1.20 | 1.458 | 3.00 | 0.000 |
| REAR SURFACE OF INTRAOCULAR LENS | -12.80 | 17.75 | 1.337 | 3.00 | 0.000 |
| RETINA | -12.00 | -- | -- | 8.04 | 0.000 |

As shown in Table 7, by the aspherical coefficient value calculation step described above (step S4 of Fig. 2), the optical simulation is repeated in a state in which the lens 1C is disposed on the front side of the eye model 10C, and the aspherical coefficients $A_6$, $A_8$, $A_{10}$, and $A_{12}$ of the lens acting in the direction of reducing the off-axis aberration are obtained as follows.

$A_6$: -8.396E-08
$A_8$: 3.356E-09
$A_{10}$: -3.356E-11
$A_{12}$: 1.105E-13

In addition, by the aspherical shape determination step described above (step S5 in Fig. 2), the aspherical shape of the rear surface 2 of the lens 1 is determined based on the aspherical coefficients $A_6$, $A_8$, $A_{10}$, and $A_{12}$, and the above expression (1).

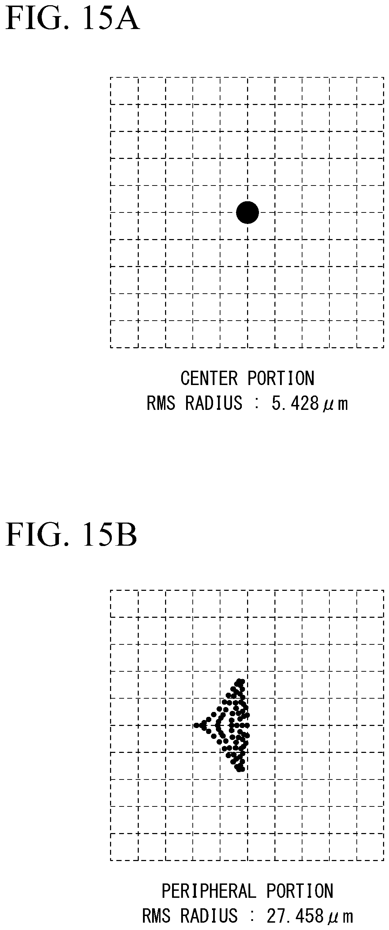

Fig. 15A is a view showing a spot diagram in the center portion of the retina in a case in which the eyeglass lens is disposed on the front side of the eye model according to Example 3 of the method for designing according to the first embodiment.

Fig. 15B is a view showing a spot diagram in the peripheral portion of the retina in a case in which the eyeglass lens is disposed on the front side of the eye model according to Example 3 of the method for designing according to the first embodiment.

Here, the RMS radii of the spot diagram with and without the lens 1C designed as described above are compared. In a case in which the lens 1C is not present, the RMS radius is 5.421 μm in the center portion and 41.282 μm in the peripheral portion, as shown in Figs. 14A and 14B. In contrast to the aforementioned case, in a case in which the lens 1C is disposed on the front side, the RMS radius is 5.428 μm in the center portion and 27.458 μm in the peripheral portion, as shown in Figs. 15A and 15B. That is, by disposing the aspherical lens 1C according to the present example, the aberration in the paracentral portion and the peripheral portion of the retina 18 can be reduced by 13.824 μm in the RMS radius.

(Overall Configuration of Designing System)

In addition, a designing system 1000 using the method for designing described above will be described.

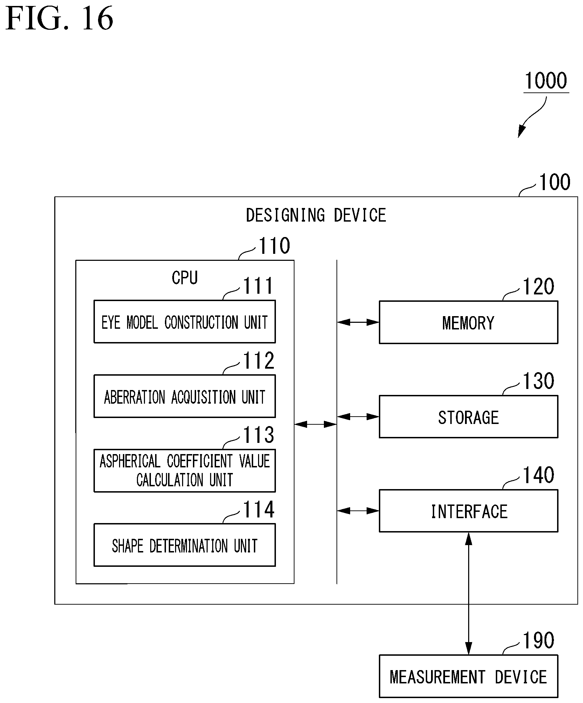

Fig. 16 is a view showing an overall configuration of the designing system of the eyeglass lens according to the first embodiment.

As shown in Fig. 16, the designing system 1000 includes a designing device 100 and a measurement device 190.

The designing device 100 is a device that designs the eyeglass lens 1. As shown in Fig. 16, the designing device 100 includes a CPU 110, a memory 120, a storage 130, and an interface 140.

The CPU 110 is a processor that controls the overall operation of the designing device 100, and exhibits the functions as an eye model construction unit 111, an aberration acquisition unit 112, an aspherical coefficient value calculation unit 113, and a shape determination unit 114 by operating based on a program. Details of the functions of each unit of the CPU 110 will be described below.

The memory 120 is a so-called main storage device, in which instructions and data for the CPU 110 to operate based on the program are loaded.

The storage 130 is a so-called auxiliary storage device and is, for example, a hard disk drive (HDD) or a solid state drive (SSD). Data, such as the value of the parameter of the model eye and the prescribed power of the wearer acquired from the measurement device 190, is stored in the storage 130.

The interface 140 is a communication interface that communicates with an external device. In the present embodiment, the interface 140 communicates with the measurement device 190.

The measurement device 190 is a device that measures the prescribed power of the wearer who wears the eyeglass lens. In addition, the measurement device 190 may further include an ocular tomography device such as a device that measures the shape and the like of each portion (the cornea, the pupil, the crystalline lens, the retina, the aqueous humor, the vitreous body, and the like) of the eye of the wearer (for example, the optical coherence tomography (OCT) described above, the optical ocular axial length measurement device using the optical method or the ultrasound method, or the ultrasound measurement/diagnostic system). The measurement device 190 transmits a measurement result of the wearer to the designing device 100.

(Functional Configuration of Designing Device)

Each unit of the CPU 110 of the designing device 100 executes each step of the method for designing the eyeglass lens 1 described above.

The eye model construction unit 111 executes the "eye model construction step" described above (step S2 of Fig. 2) to construct the eye model that approximates the eye of the wearer. In this case, the eye model construction unit 111 may use the value of the model eye stored in advance in the storage 130 as the value of the parameter of each optical element. In addition, the eye model construction unit 111 may use the measurement result of the eye of the wearer measured by the measurement device 190 as the value of the parameter of each optical element.

The aberration acquisition unit 112 executes the "aberration acquisition step" described above (step S3 of Fig. 2), and acquires the aberration in the center portion of the retina of the eye model 10 of the wearer and the aberration (off-axis aberration) in the paracentral portion and the peripheral portion of the retina.

The aspherical coefficient value calculation unit 113 executes the "aspherical coefficient value calculation step" described above (step S4 of Fig. 2), and obtains the value of the aspherical coefficient $A_n$ (or values of the aspherical coefficients $U_n$ and $V_n$) capable of reducing the off-axis aberration.

The shape determination unit 114 executes the "refractive surface determination step" described above (step S1 in Fig. 2), and determines the shape of the refractive surface of the rear surface 2 of the lens 1 based on the prescribed power of the wearer. In addition, the shape determination unit 114 executes the "aspherical shape determination step" described above (step S5 of Fig. 2), and determines the final shape (aspherical shape) of the refractive surface of the rear surface 2 of the lens 1.

It should be noted that the procedures of various processes of the designing device 100 described above are stored in a computer-readable storage medium (storage 130) in a form of a program, and various processes are performed by reading out and executing the program by a computer. In addition, the computer-readable storage medium refers to a magnetic disk, a magneto-optical disk, a CD-ROM, a DVD-ROM, a semiconductor memory, or the like. In addition, the computer program may be distributed to the computer via a communication line, and the computer that receives the distribution may execute the program.

The program described above may be a program realizing a part of the functions described above. Further, the program may be a so-called difference file (difference program) capable of realizing the functions described above in combination with a program recorded in advance in the computer system.

(Action and Effect of Method for Designing Eyeglass Lens and Designing Device)

As described above, the method for designing the eyeglass lens 1 according to the present embodiment includes the eye model construction step of determining the value of the parameter of each of the plurality of optical elements, and constructing the eye model 10, the aberration acquisition step of making the light ray 24 incident at a predetermined angle $\theta$ with respect to the visual axis 20 of the eye model 10 to obtain the off-axis aberration in the paracentral portion and the peripheral portion of the retina of the eye model 10 by the optical simulation, the aspherical coefficient value calculation step of disposing the eyeglass lens 1 on the front side of the eye model 10 and performing the optical simulation to obtain the aspherical coefficient value acting in the direction of reducing the off-axis aberration, and the aspherical shape determination step of determining the aspherical shape of the eyeglass lens 1 based on the aspherical coefficient value.

In this way, it is possible to design the eyeglass lens capable of reducing the aberration in the paracentral portion and the peripheral portion of the retina and improving the image-forming state on the retina.

In addition, in the eye model construction step, the crystalline lens or the intraocular lens is selected as one of the optical elements to determine the value of the parameter.

In this way, it is possible to construct the appropriate eye model 10 in accordance with whether or not the wearer uses the intraocular lens. As a result, it is possible to design the eyeglass lens capable of more accurately reducing the aberration in the paracentral portion and the peripheral portion of the retina.

In addition, in the eye model construction step, the contact lens is further selected as one of the optical elements to determine the value of the parameter.

In this way, it is possible to construct the appropriate eye model 10 in accordance with whether or not the wearer uses the contact lens. As a result, it is possible to design the eyeglass lens capable of more accurately reducing the aberration in the paracentral portion and the peripheral portion of the retina.

In addition, in the eye model construction step, the parameters of the plurality of optical elements are determined using the value of the model eye modeled from the biometric data.

In this way, it is possible to easily and quickly construct the eye model 10.

In addition, in the eye model construction step, the parameters of the plurality of optical elements are determined using the value obtained by measuring the eye of the wearer.

In this way, it is possible to construct the eye model 10 that approximates the eye of the wearer. As a result, it is possible to design the eyeglass lens capable of more accurately reducing the aberration in the paracentral portion and the peripheral portion of the retina.

In addition, in the eye model construction step, the values of the parameters of the plurality of optical elements may be determined using the value of the model eye and the value obtained by measuring the eye of the wearer.

In this way, it is possible to determine the values of the parameters using the measurement value for the optical element in which the individual difference of the wearer appears greatly. As a result, it is possible to construct the eye model 10 that approximates the eye of the wearer while simplifying the construction of the eye model 10 by using the value of the model eye.

[Order System]

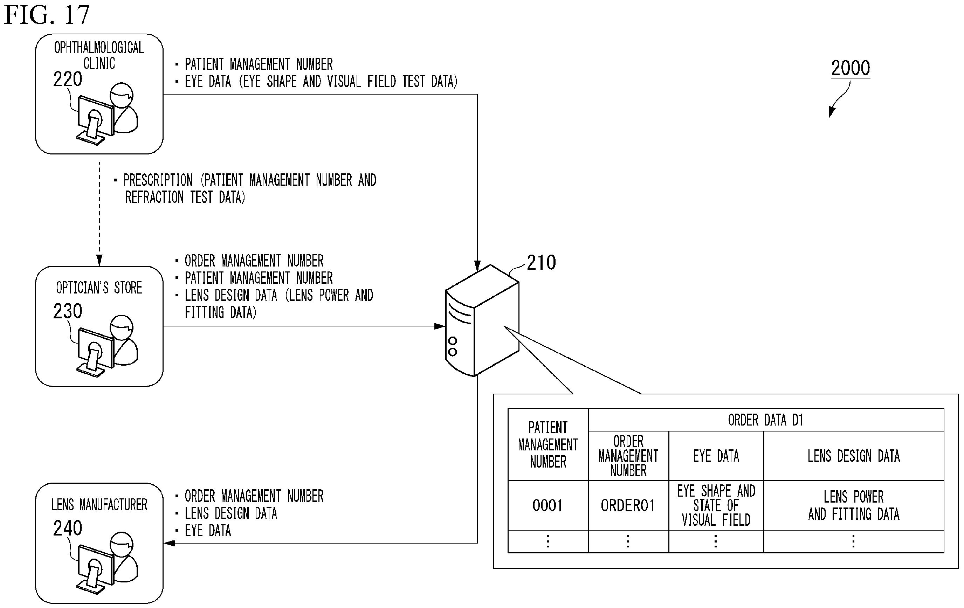

Hereinafter, the order system according to the first embodiment of the present invention will be described with reference to Figs. 17 to 20.

(Overall Configuration of Order System)

Fig. 17 is a view showing an overall configuration of the order system according to the first embodiment.

An overall configuration of an order system 2000 will be described in detail with reference to Fig. 17.

As shown in Fig. 17, the order system 2000 includes a server device 210, a terminal device 220 installed in an ophthalmological clinic, a terminal device 230 installed in an optician's store, and a terminal device 240 installed in a lens manufacturer.

In the ophthalmological clinic, an ophthalmologist or another medical staff measures eye data (eye shape and state of the visual field) of the patient using the measurement device 190 of the designing system 1000 described above. This eye data is associated with a patient management number, which is a number for identifying the patient. The ophthalmologist or another medical staff operates the terminal device 220 to transmit the patient management number, and the eye data associated with the patient management number to the server device 210. That is, the measurement device 190 of the designing system 1000 transmits the eye data (measurement result) to the designing device 100 of the designing system 1000 via the terminal device 220 and the server device 210 of the order system 2000. In addition, in the ophthalmological clinic, a refraction test of the eye is performed with respect to the patient. The refraction test data is given to the patient as a prescription in association with the patient management number.

In the optician's store, the lens design data (lens power and fitting data) are measured and acquired for the user (patient) who visits the store. The user gives the prescription (refraction test data and patient management number) given by the ophthalmologist to the clerk of the optician's store. The clerk of the optician's store specifies the lens power based on the refraction test data. In addition, the clerk of the optician's store acquires the fitting data of the user. The fitting data is a parameter group in accordance with the shape of the face of the user, the distance between both eyes, and the like, and is, for example, the distance between the corneal apexes, the forward tilt angle, the warp angle, and the like. The clerk of the optician's store places an order for the lens using the terminal device 230. In this case, the clerk of the optician's store transmits the lens design data (lens power and fitting data) to the server device 210 in association with the patient management number and the order management number assigned to each order.

The lens manufacturer manufactures the lens in response to the order from the optician's store. The staff of the lens manufacturer acquires a data group associated with one order management number from the server device 210 via the terminal device 240. This data group includes the eye data acquired by the ophthalmological clinic and the lens design data acquired by the optician's store. It should be noted that the eye data and the lens design data for one user (patient) are associated with the same patient management number on the server device 210. The staff of the lens manufacturer manufactures the lens based on the eye data and the lens design data associated with one order management number. In this case, the staff of the lens manufacturer manufactures the lens suitable for the user by using the method for designing the eyeglass lens or the designing device 100 of the designing system 1000 described above.

(Functional Configuration of Server Device)

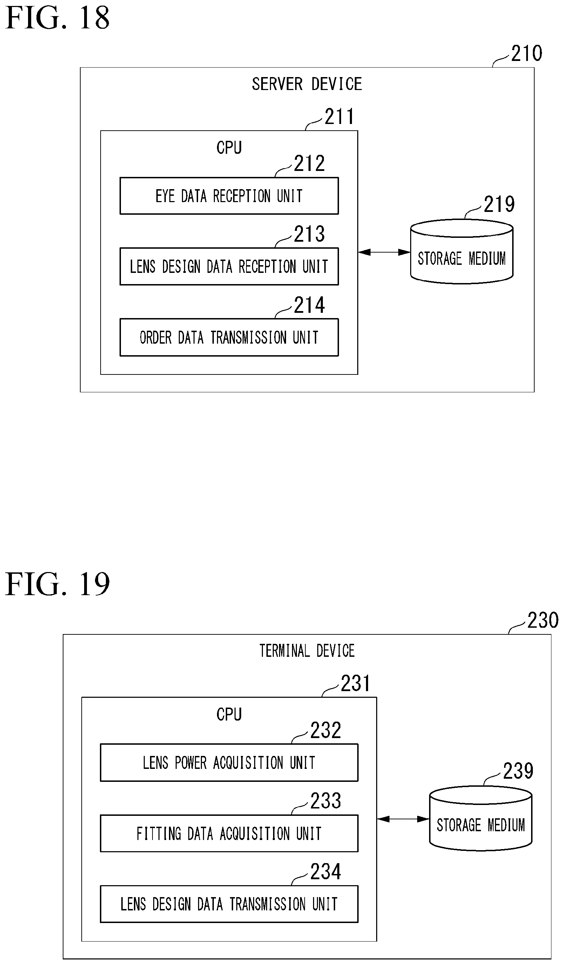

Fig. 18 is a view showing a functional configuration of the server device according to the first embodiment.

A functional configuration of the server device 210 will be described in detail with reference to Fig. 18.

As shown in Fig. 18, the server device 210 is provided with a CPU 211 and a storage medium 219. By operating based on a predetermined program, the CPU 211 exhibits the functions as an eye data reception unit 212, a lens design data reception unit 213, and an order data transmission unit 214.

The eye data reception unit 212 receives the eye data associated with the patient management number from the terminal device 220 of the ophthalmological clinic.

The lens design data reception unit 213 receives the lens design data associated with the patient management number from the terminal device 230 of the optician's store.

The order data transmission unit 214 transmits the eye data and the lens design data, which are associated with the same patient management number, to the terminal device 240 of the lens manufacturer in association with one order management number.

A plurality of order data D1 (Fig. 17) are recorded and stored in the storage medium 219. Here, the order data D1 is a set of the eye data and the lens design data associated with one order management number. In addition, the order data D1 is further associated with the patient management number as shown in Fig. 17.

(Functional Configuration of Terminal Device)

Fig. 19 is a view showing a functional configuration of the terminal device according to the first embodiment.

A functional configuration of the terminal device 230 of the optician's store will be described in detail with reference to Fig. 19.

As shown in Fig. 19, the terminal device 230 is provided with a CPU 231 and a storage medium 239. By operating based on a predetermined program, the CPU 231 exhibits the functions as a lens power acquisition unit 232, a fitting data acquisition unit 233, and a lens design data transmission unit 234.

The lens power acquisition unit 232 acquires the lens power through the operation by the clerk of the optician's store.

The fitting data acquisition unit 233 acquires the fitting data (distance between corneal apexes, forward tilt angle, warp angle, and the like) through the operation by the clerk of the optician's store.

The lens design data transmission unit 234 transmits the lens design data including the lens power and the fitting data to the server device 210 in association with the patient management number and the order management number acquired in the ophthalmological clinic.

(Process Flow of Order System)

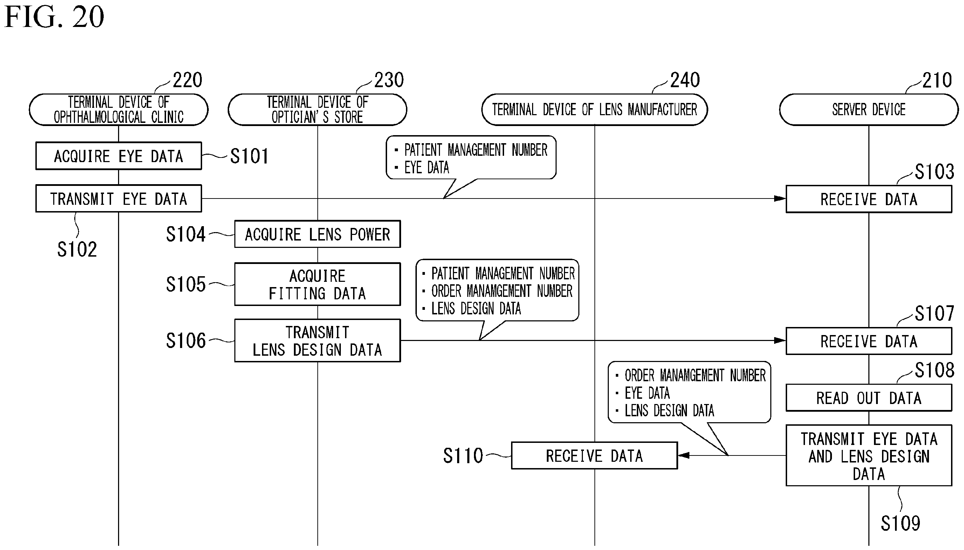

Fig. 20 is a view showing a process flow of the order system according to the first embodiment.

Here, an example of a process of the order system 2000 according to the present embodiment will be described in detail with reference to Fig. 20.

First, in the ophthalmological clinic, the ophthalmologist or another medical staff measures the eye shape and the state of the visual field as the eye data of the patient. The eye shape is a parameter measured by using the optical coherence tomography, the ocular axial length measurement device, the corneal shape analysis device, anterior ocular picture imaging device, and the like included in the measurement device 190 of the designing system 1000, and includes, for example, the shape of each element such as the cornea, the aqueous humor, the pupil, the ciliary muscle, the extraocular muscle, the crystalline lens, the vitreous body, and the retina, the refractive index, and the distance between the elements. The state of the visual field is a parameter measured by using the optical coherence tomography, a fundus camera, an automatic perimeter, and the like included in the measurement device 190 of the designing system 1000, and includes, for example, the visual field, the retina, or a position of nervous disorder. The eye data includes at least one of these parameters. The terminal device 220 of the ophthalmological clinic acquires the eye data measured by various measurement devices of the measurement device 190 through the operation by the ophthalmologist or another medical staff (step S101).

In addition, in the ophthalmological clinic, the ophthalmologist or another medical staff will perform the refraction test of the eye with respect to the patient. The refraction test data is given to the patient as the prescription in association with the patient management number.

Next, the terminal device 220 of the ophthalmological clinic transmits the patient management number, and the eye data associated with the patient management number to the server device 210 through the operation by the ophthalmologist or another medical staff (step S102).

When the patient management number and the eye data are received from the terminal device 220 of the ophthalmological clinic, the eye data reception unit 212 of the server device 210 records the patient management number and the eye data in the storage medium 219 (step S103).

In the optician's store, the clerk measures the lens design data of the user (patient). The lens design data includes the lens power and the fitting data. First, the clerk of the optician's store specifies the lens power based on the refraction test data of the user recorded in the prescription. Then, the lens power acquisition unit 232 of the terminal device 230 of the optician's store acquires the specified lens power through the operation by the clerk of the optician's store (step S104).

In addition, the clerk of the optician's store measures the fitting data of the user. For example, the clerk of the optician's store measures the fitting data such as the distance between corneal apexes of the user, and the forward tilt angle and the warp angle of the eyeglass lens by using a tablet terminal in which a dedicated application is installed, a dedicated device, a ruler, and the like. Then, the fitting data acquisition unit 233 of the terminal device 230 of the optician's store acquires the fitting data of the user through the operation by the clerk of the optician's store (step S105).

Next, the clerk of the optician's store operates the terminal device 220 of the optician's store to place an order for the lens. In this case, when the order operation of the clerk of the optician's store is received, the lens design data transmission unit 234 of the terminal device 230 of the optician's store transmits the acquired lens design data (lens power and fitting data) to the server device 210 in association with the patient management number and the order management number (step S106).

The lens design data reception unit 213 of the server device 210 receives the patient management number, the order management number, and the lens design data from the lens design data transmission unit 234 of the terminal device 230 of the optician's store (step S107).

Next, the order data transmission unit 214 of the server device 210 transmits the order data to the terminal device 240 of the lens manufacturer (step S109). The order data includes the order management number, the eye data, and the lens design data. The order data transmission unit 214 searches for and extracts the eye data associated with the patient management number received by the lens design data reception unit 213 from the storage medium 219. Moreover, the order data transmission unit 214 transmits the order data D1 (Fig. 1) including the order management number and the lens design data received by the lens design data reception unit 213 and the extracted eye data to the terminal device 240 of the lens manufacturer.

When the order data is received from the server device 210 via the terminal device 240 (step S 110), the staff of the lens manufacturer manufactures the lens suitable for the user (patient) and delivers the manufactured lens to the optician's store based on the lens design data and the eye data included in the order data. In this case, the staff of the lens manufacturer manufactures a suitable lens by using the method for designing the eyeglass lens or the designing device 100 of the designing system 1000 described above.

(Action and Effect of Order System)

With the configuration described above, the eye data of the patient acquired by the ophthalmological clinic and the lens design data of the user (patient) acquired by the optician's store are associated with each other in the server device 210, the order data D1 in which the eye data and the lens design data are integrated is transmitted to the terminal device 240 of the lens manufacturer, and the order is placed. As a result, since the eye data of the user can be transmitted to the lens manufacturer without going through a third party such as the optician's store, it is possible to protect the privacy and improve the efficiency of the order procedure in realizing the service that provides the lens which is more suitable for each user.

In addition, the eye data includes the state of the visual field. The state of the visual field is, for example, the visual field, the retina, or the position of optic nerve disorder. As a result, the server device 210 can provide the information for designing the appropriate lens in accordance with the state of the visual field of the user to the lens manufacturer.

In addition, with the configuration described above, the terminal device 230 of the optician's store transmits the lens design data acquired in the optician's store to the server device 210 in association with the patient management number. Thereby, in the server device 210, the eye data acquired from the terminal device 220 of the ophthalmological clinic and the lens design data acquired from the terminal device 230 of the optician's store can be associated and integrated by the patient management number.

<Second Embodiment>

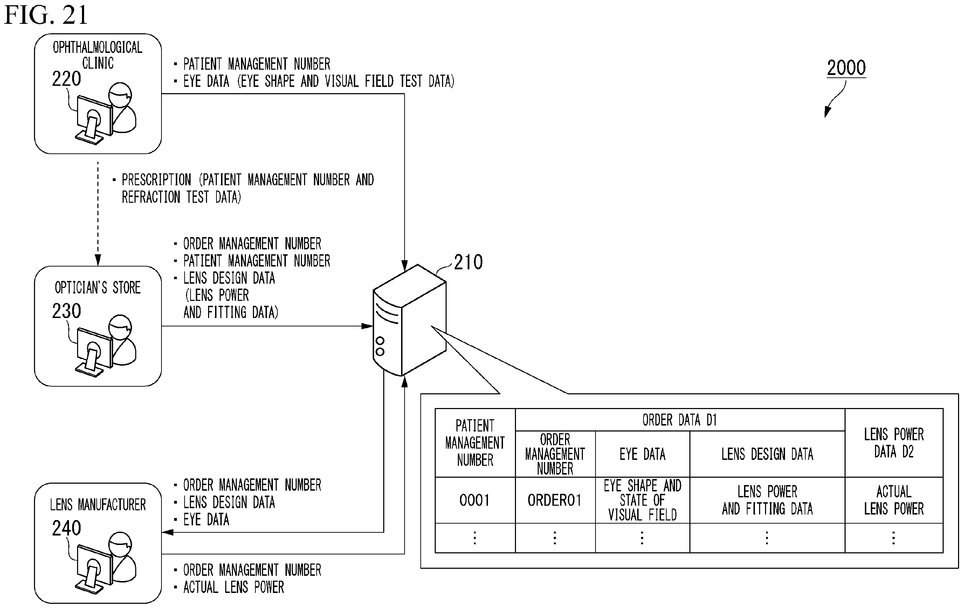

Hereinafter, an order system according to a second embodiment of the present invention will be described with reference to Figs. 21 to 23.

The same components as those in the first embodiment are designated by the same reference numerals, and the detailed description thereof will be omitted.

(Overall Configuration of Order System)

Fig. 21 is a view showing an overall configuration of the order system according to the second embodiment.

The lens manufacturer manufactures the lens based on the eye data and the lens design data acquired from the server device 210 via the terminal device 240. In this case, there is a possibility that the lens power of the actually manufactured lens is different from the refraction test data included in the prescription of the ophthalmologist and the lens power acquired by the terminal device 230 (lens power acquisition unit 232) of the optician's store, due to the adjustment based on the eye data and the fitting data. Therefore, as shown in Fig. 21, the server device 210 according to the present embodiment acquires the data in which the order management number of the manufactured lens and the actual lens power are associated with each other from the terminal device 240 of the lens manufacturer.

(Functional Configuration of Server Device)

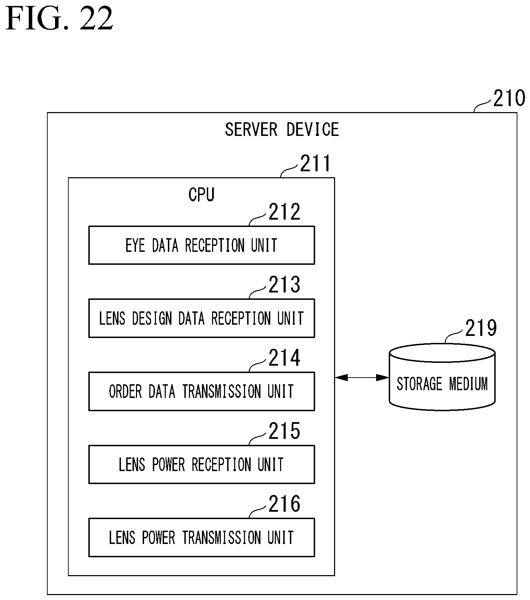

Fig. 22 is a view showing a functional configuration of the server device according to the second embodiment.

As shown in Fig. 22, in the server device 210 according to the present embodiment, the CPU 211 further functions as a lens power reception unit 215 and a lens power transmission unit 216 in addition to each function according to the first embodiment.

The lens power reception unit 215 receives the actual lens power of the lens manufactured by the lens manufacturer from the terminal device 240 of the lens manufacturer.

The lens power transmission unit 216 transmits the lens power received by the lens power reception unit 215 to the terminal device 220 of the ophthalmological clinic in association with the patient management number.

(Process Flow of Order System)

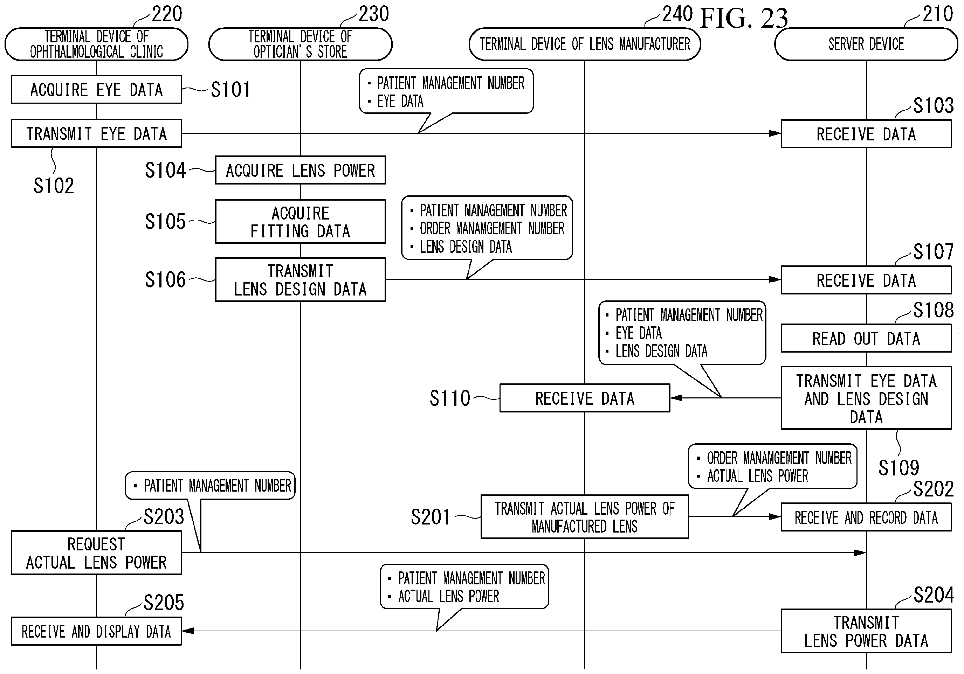

Fig. 23 is a view showing a process flow of the order system according to the second embodiment.

Here, an example of a process of the order system 2000 according to the present embodiment will be described in detail with reference to Fig. 23. It should be noted that since steps S101 to S110 of Fig. 23 are the same as the processes in the first embodiment (steps S101 to S110 of Fig. 20), the description thereof will be omitted.

When the staff of the lens manufacturer manufactures the lens based on the eye data and the lens design data acquired from the server device 210, the staff of the lens manufacturer transmits the lens power data indicating the actual lens power of the manufactured lens via the terminal device 240 to the server device 210 in association with the order management number (step S201).

When the order management number and the actual lens power are received from the terminal device 240 of the lens manufacturer, the lens power reception unit 215 of the server device 210 records these data in the storage medium 219 (step S202). In this case, the lens power reception unit 215 searches for the data group associated with the order management number received from the terminal device 240 of the lens manufacturer from the storage medium 219. Moreover, for example, as shown in Fig. 21, the lens power reception unit 215 adds and records lens power data D2 indicating the actual lens power to the searched data group. In this way, the server device 210 can record and store the patient management number, the order data D1 (order management number, eye data, and lens design data), and the lens power data D2, which are associated with one user (patient), as a set of data groups.

In addition, the ophthalmologist or another medical staff of the ophthalmological clinic can request the server device 210 for the lens power of the eyeglass lens actually used by the patient via the terminal device 220, as needed at the time of a medical examination or the like. In this case, when the designation of the patient management number by the ophthalmologist or another medical staff is received, the terminal device 220 of the ophthalmological clinic transmits the actual lens power associated with the patient management number to the server device 210 (step S203).

When the request is received from the terminal device 220 of the ophthalmological clinic, the lens power transmission unit 216 of the server device 210 searches for the lens power data D2 associated with the patient management number from the storage medium 219. Moreover, the lens power transmission unit 216 transmits the searched lens power data D2 (actual lens power) to the terminal device 220 of the ophthalmological clinic in association with the patient management number (step S204).

When the lens power data D2 is received from the server device 210, the terminal device 220 of the ophthalmological clinic displays the lens power data D2 on a monitor or the like (not shown) and notifies the ophthalmologist or another medical staff (step S205).

(Action and Effect of Order System)

With the configuration described above, the server device 210 can acquire the actual lens power after adjustment based on the eye data and the fitting data of the lens manufacturer, and can provide the acquired actual lens power in response to the request of the ophthalmologist or another medical staff. In this way, the ophthalmologist or another medical staff can perform appropriate medical examination and adjustment of the eyeglass power in accordance with the state of the eyeglasses (lenses) actually used by the patient.

(Hardware Configuration of Each Unit of Order System)

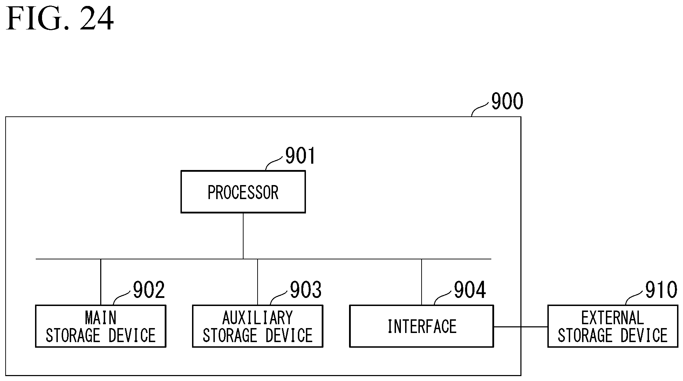

Fig. 24 is a view showing an example of a hardware configuration of the server device and the terminal device according to at least one embodiment.

Hereinafter, the hardware configuration of the server device 210 and the terminal devices 220, 230, and 240 of the order system 2000 will be described with reference to Fig. 24.

A computer 900 includes a processor 901, a main storage device 902, an auxiliary storage device 903, and an interface 904.

The server device 210 and the terminal devices 220, 230, and 240 described above are mounted on the computer 900. Moreover, an operation of each functional unit described above is stored in the auxiliary storage device 903 in the form of a program. The processor 901 reads out the program from the auxiliary storage device 903, loads the program into the main storage device 902, and executes the process described above in accordance with the program. In addition, the processor 901 secures a storage region corresponding to each storage unit described above in the main storage device 902 in accordance with the program. Exemplary examples of the processor 901 include a central processing unit (CPU), a graphic processing unit (GPU), and a microprocessor.

The program may be used for realizing a part of the functions of the computer 900. For example, the program may exhibit the functions in combination with another program stored in advance in the auxiliary storage device 903, or in combination with another program mounted on another device. It should be noted that, in another embodiment, the computer 900 may include a custom large scale integrated circuit (LSI), such as a programmable logic device (PLD), in addition to or instead of the configuration described above. Exemplary examples of the PLD include a programmable array logic (PAL), a generic array logic (GAL), a complex programmable logic device (CPLD), and a field programmable gate array (FPGA). In this case, a part or all of the functions realized by the processor 901 may be realized by an integrated circuit. The integrated circuit is also included in the example of the processor.

Exemplary examples of the auxiliary storage device 903 include a hard disk drive (HDD), a solid state drive (SSD), a magnetic disk, a magneto-optical disk, a compact disc read only memory (CD-ROM), a digital versatile disc read only memory (DVD-ROM), and a semiconductor memory. The auxiliary storage device 903 may be an internal medium directly connected to a bus of the computer 900 or an external storage device 910 connected to the computer 900 via the interface 904 or a communication line. In addition, in a case in which this program is distributed to the computer 900 via the communication line, the computer 900, which receives the distribution, may expand the program into the main storage device 902 and execute the process described above. In at least one embodiment, the auxiliary storage device 903 is a non-transitory storage medium.

In addition, the program may be a program realizing a part of the functions described above. Further, the program may be a so-called difference file (a difference program) which realizes the functions described above in combination with another program stored in advance in the auxiliary storage device 903.

As described above, some embodiments of the present invention have been described, but all of these embodiments are merely examples, and are not intended to limit the scope of the present invention. These embodiments can be carried out in various other forms, and various omissions, replacements, and changes can be made without departing from the gist of the invention. These embodiments and the modifications thereof are included in the scope of the invention described in the claims and the equivalents thereof, as are included in the scope or the gist of the invention.

For example, in the method for designing the eyeglass lens and the designing device 100 according to the first embodiment described above, the aspect has been described in which the S power is used as the prescribed power when determining the refractive surface of the rear surface 2 of the lens 1, but the present invention is not limited to this. In another embodiment, as the prescribed power, a C power, an astigmatic axis, or the like may be used.

In addition, in the method for designing the eyeglass lens and the designing device 100 according to the first embodiment described above, the aspect has been described in which the aspherical component that reduces the aberration in the peripheral portion of the retina is applied to the refractive surface of the rear surface 2 of the lens 1, but the present invention is not limited to this. In another embodiment, this aspherical component may be applied to the refractive surface of the front surface 3 of the lens 1.

In addition, in each of the embodiments described above, the aspect has been described in which the measurement device 190 of the designing system 1000 and the terminal device 220 of the ophthalmological clinic of the order system 2000 are different devices, but the present invention is not limited to this. In another embodiment, the measurement device 190 of the designing system 1000 may function as the terminal device 220 of the ophthalmological clinic.

Similarly, in each of the embodiments described above, the aspect has been described in which the designing device 100 of the designing system 1000 and the terminal device 240 of the lens manufacturer of the order system 2000 are different devices, but the present invention is not limited to this. In another embodiment, the designing device 100 of the designing system 1000 may function as the terminal device 240 of the lens manufacturer.

[Industrial Applicability]

With the method for designing the eyeglass lens, the designing device, and the program described above, it is possible to reduce the aberration in the paracentral portion and the peripheral portion of the retina and improve the image-forming state on the retina.

In addition, with the server device, the terminal device, the order system, the information providing method, and the program described above, in providing a lens suitable for each user, it is possible to improve the efficiency of the order procedure while protecting the privacy of the user.

[Reference Signs List]

1, 1B, 1C: Eyeglass lens (lens)
2: Rear surface
3: Front surface
10, 10B, 10C: Eye model
12: Cornea
14: Pupil
16: Intraocular lens
18: Retina
31: Crystalline lens
33: Contact lens
1000: Designing system
100: Designing device
110: CPU
111: Eye model construction unit
112: Aberration acquisition unit
113: Aspherical coefficient value calculation unit
114: Shape determination unit
120: Memory
130: Storage
140: Interface
190: Measurement device
2000: Order system
210: Server device

211: CPU
212: Eye data reception unit
213: Lens design data reception unit
214: Order data transmission unit
215: Lens power reception unit
216: Lens power transmission unit
219: Storage medium
220, 230, 240: Terminal device
231: CPU
232: Lens power acquisition unit
233: Fitting data acquisition unit
234: Lens design data transmission unit
239: Storage medium

**Claims**

1.  A method for designing an eyeglass lens in which at least any one surface of a refractive surface on a front surface side and a refractive surface on a rear surface side is formed of an aspherical surface, the method comprising:

    an eye model construction step of determining a value of a parameter of each of a plurality of optical elements, and constructing an eye model;
    an aberration acquisition step of making a light ray incident at a predetermined angle with respect to a visual axis of the eye model to obtain an off-axis aberration in a paracentral portion and a peripheral portion of a retina of the eye model by an optical simulation;
    an aspherical coefficient value calculation step of disposing an eyeglass lens on a front side of the eye model and performing the optical simulation to obtain an aspherical coefficient value acting in a direction of reducing the off-axis aberration; and
    an aspherical shape determination step of determining an aspherical shape of the eyeglass lens based on the aspherical coefficient value.

2.  The method for designing an eyeglass lens according to Claim 1,
    wherein, in the eye model construction step, a crystalline lens or an intraocular lens is selected as one of the optical elements to determine the value of the parameter.

3.  The method for designing an eyeglass lens according to Claim 2,
    wherein, in the eye model construction step, a contact lens is further selected as one of the optical elements to determine the value of the parameter.

4.  The method for designing an eyeglass lens according to any one of Claims 1 to 3,
    wherein, in the eye model construction step, the parameters of the plurality of optical elements are determined using a value of a schematic eye modeled from biometric data.

5.  The method for designing an eyeglass lens according to any one of Claims 1 to 4,
    wherein, in the eye model construction step, the parameters of the plurality of optical elements are determined using a value obtained by measuring an eye of a wearer.

6.  A designing device of an eyeglass lens in which at least any one surface of a refractive surface on a front surface side and a refractive surface on a rear surface side is formed of an aspherical surface, the designing device comprising:

    an eye model construction unit configured to determine a value of a parameter of each of a plurality of optical elements, and construct an eye model;
    an aberration acquisition unit configured to make a light ray incident at a predetermined angle with respect to a visual axis of the eye model, and obtain an off-axis aberration in a paracentral portion and a peripheral portion of a retina of the eye model by an optical simulation;
    an aspherical coefficient value calculation unit configured to dispose an eyeglass lens on a front side of the eye model, perform the optical simulation, and obtain an aspherical coefficient value acting in a direction of reducing the off-axis aberration; and

an aspherical shape determination unit configured to determine an aspherical shape of the eyeglass lens based on the aspherical coefficient value.

7. A program causing a computer of a designing device of an eyeglass lens in which at least any one surface of a refractive surface on a front surface side and a refractive surface on a rear surface side is formed of an aspherical surface, to execute:

an eye model construction step of determining a value of a parameter of each of a plurality of optical elements, and constructing an eye model;

an aberration acquisition step of making a light ray incident at a predetermined angle with respect to a visual axis of the eye model to obtain an off-axis aberration in a paracentral portion and a peripheral portion of a retina of the eye model by an optical simulation;

an aspherical coefficient value calculation step of disposing an eyeglass lens on a front side of the eye model and performing the optical simulation to obtain an aspherical coefficient value acting in a direction of reducing the off-axis aberration; and

an aspherical shape determination step of determining an aspherical shape of the eyeglass lens based on the aspherical coefficient value.

8. A server device comprising:

an eye data reception unit configured to receive eye data associated with a patient management number from a terminal device of an ophthalmological clinic;

a lens design data reception unit configured to receive lens design data associated with the patient management number from a terminal device of an optician's store; and

an order data transmission unit configured to transmit the eye data and the lens design data, which are associated with the same patient management number, to a terminal device of a lens manufacturer in association with one order management number.

9. The server device according to Claim 8,
wherein the eye data includes a state of a visual field.

10. The server device according to Claim 8 or 9, further comprising:

a lens power reception unit configured to receive actual lens power of a lens manufactured by the lens manufacturer from the terminal device of the lens manufacturer; and

a lens power transmission unit configured to transmit the lens power to the terminal device of the ophthalmological clinic in association with the patient management number.

11. A terminal device installed in an optician's store, the terminal device comprising:
a lens design data transmission unit configured to transmit lens design data acquired in the optician's store to a server device in association with a patient management number acquired in an ophthalmological clinic.

12. An order system comprising:

the server device according to any one of Claims 8 to 10; and
the terminal device according to Claim 11.

13. An information providing method comprising:

a step of receiving, by a server device, eye data associated with a patient management number from a terminal device of an ophthalmological clinic;

a step of receiving, by the server device, lens design data associated with the patient management number from a terminal device of an optician's store; and

a step of transmitting, by the server device, the eye data and the lens design data, which are associated with the same patient management number, to a terminal device of a lens manufacturer in association with one order management number.

**14.** A program causing a server device to execute:

a step of receiving eye data associated with a patient management number from a terminal device of an ophthalmological clinic;

a step of receiving, by the server device, lens design data associated with the patient management number from a terminal device of an optician's store; and

a step of transmitting, by the server device, the eye data and the lens design data, which are associated with the same patient management number, to a terminal device of a lens manufacturer in association with one order management number.

# FIG. 1A

# FIG. 1B

FIG. 2

```
          START
            │
            ▼
┌──────────────────────────┐
│ DETERMINE REFRACTIVE SURFACE │──S1
└──────────────────────────┘
            │
            ▼
┌──────────────────────────┐
│    CONSTRUCT EYE MODEL    │──S2
└──────────────────────────┘
            │
            ▼
┌──────────────────────────┐
│    ACQUIRE ABERRATION     │──S3
└──────────────────────────┘
            │
            ▼
┌──────────────────────────┐
│   CALCULATE ASPHERICAL    │──S4
│    COEFFICIENT VALUE      │
└──────────────────────────┘
            │
            ▼
┌──────────────────────────┐
│ DETERMINE ASPHERICAL SHAPE │──S5
└──────────────────────────┘
            │
            ▼
           END
```

FIG. 3

S2

```
                START
                  │
                  ▼
┌────────────────────────────────────────┐
│ SELECT CRYSTALLINE LENS OR INTRAOCULAR LENS │──S21
└────────────────────────────────────────┘
                  │
                  ▼
┌────────────────────────────────────────┐
│  SELECT PRESENCE OR ABSENCE OF CONTACT LENS │──S22
└────────────────────────────────────────┘
                  │
                  ▼
┌────────────────────────────────────────┐
│     DETERMINE VALUE OF PARAMETER        │──S23
└────────────────────────────────────────┘
                  │
                  ▼
                 END
```

FIG. 4

(EAR SIDE)

(NOSE SIDE)

FIG. 5A

FIG. 5B

FIG. 6

(EAR SIDE)

(NOSE SIDE)

FIG. 7A

FIG. 7B

# FIG. 8A

CENTER PORTION
RMS RADIUS : 5.775 $\mu$ m

# FIG. 8B

PERIPHERAL PORTION
RMS RADIUS : 42.814 $\mu$ m

## FIG. 9A

CENTER PORTION
RMS RADIUS : 5.821 $\mu$ m

## FIG. 9B

PERIPHERAL PORTION
RMS RADIUS : 32.410 $\mu$ m

# FIG. 10

(EAR SIDE)

(NOSE SIDE)

EP 4 020 063 A1

FIG. 11A

CENTER PORTION
RMS RADIUS : 5.618 $\mu$ m

FIG. 11B

PERIPHERAL PORTION
RMS RADIUS : 26.115 $\mu$ m

FIG. 12A

CENTER PORTION
RMS RADIUS : 5.582$\mu$m

FIG. 12B

PERIPHERAL PORTION
RMS RADIUS : 21.526$\mu$m

FIG. 13

(EAR SIDE)

(NOSE SIDE)

10C

18

16
16b
16a

14

12b
12a
12

33b
33
33a
20

# FIG. 14A

CENTER PORTION
RMS RADIUS : 5.421 $\mu$m

# FIG. 14B

PERIPHERAL PORTION
RMS RADIUS : 41.282 $\mu$m

## FIG. 15A

CENTER PORTION
RMS RADIUS : 5.428 $\mu$ m

## FIG. 15B

PERIPHERAL PORTION
RMS RADIUS : 27.458 $\mu$ m

FIG. 16

1000

100

DESIGNING DEVICE

110

CPU

111

EYE MODEL CONSTRUCTION UNIT

112

ABERRATION ACQUISITION UNIT

113

ASPHERICAL COEFFICIENT VALUE
CALCULATION UNIT

114

SHAPE DETERMINATION UNIT

120

MEMORY

130

STORAGE

140

INTERFACE

190

MEASUREMENT DEVICE

# FIG. 17

OPHTHALMOLOGICAL CLINIC
220

· PATIENT MANAGEMENT NUMBER
· EYE DATA (EYE SHAPE AND VISUAL FIELD TEST DATA)

2000

· PRESCRIPTION (PATIENT MANAGEMENT NUMBER AND REFRACTION TEST DATA)

OPTICIAN'S STORE
230

· ORDER MANAGEMENT NUMBER
· PATIENT MANAGEMENT NUMBER
· LENS DESIGN DATA (LENS POWER AND FITTING DATA)

210

LENS MANUFACTURER
240

· ORDER MANAGEMENT NUMBER
· LENS DESIGN DATA
· EYE DATA

| PATIENT MANAGEMENT NUMBER | ORDER DATA D1 | | |
|---|---|---|---|
| | ORDER MANAGEMENT NUMBER | EYE DATA | LENS DESIGN DATA |
| 0001 | ORDER01 | EYE SHAPE AND STATE OF VISUAL FIELD | LENS POWER AND FITTING DATA |
| ⋮ | ⋮ | ⋮ | ⋮ |

EP 4 020 063 A1

# FIG. 18

210

SERVER DEVICE

211

CPU

212

EYE DATA RECEPTION UNIT

213

LENS DESIGN DATA RECEPTION UNIT

214

ORDER DATA TRANSMISSION UNIT

219

STORAGE MEDIUM

# FIG. 19

230

TERMINAL DEVICE

231

CPU

232

LENS POWER ACQUISITION UNIT

233

FITTING DATA ACQUISITION UNIT

234

LENS DESIGN DATA TRANSMISSION UNIT

239

STORAGE MEDIUM

# FIG. 20

**220** TERMINAL DEVICE OF OPHTHALMOLOGICAL CLINIC

**230** TERMINAL DEVICE OF OPTICIAN'S STORE

**240** TERMINAL DEVICE OF LENS MANUFACTURER

**210** SERVER DEVICE

- ACQUIRE EYE DATA — S101

- PATIENT MANAGEMENT NUMBER
- EYE DATA

- TRANSMIT EYE DATA

S103 — RECEIVE DATA

S102

S104 — ACQUIRE LENS POWER

S105 — ACQUIRE FITTING DATA

- PATIENT MANAGEMENT NUMBER
- ORDER MANAMGEMENT NUMBER
- LENS DESIGN DATA

S106 — TRANSMIT LENS DESIGN DATA

S107 — RECEIVE DATA

- ORDER MANAMGEMENT NUMBER
- EYE DATA
- LENS DESIGN DATA

S108 — READ OUT DATA

S110 — RECEIVE DATA

TRANSMIT EYE DATA AND LENS DESIGN DATA

S109

## FIG. 21

OPHTHALMOLOGICAL CLINIC

**220**

· PATIENT MANAGEMENT NUMBER
· EYE DATA (EYE SHAPE AND VISUAL FIELD TEST DATA)

**2000**

· PRESCRIPTION (PATIENT MANAGEMENT NUMBER AND REFRACTION TEST DATA)

OPTICIAN'S STORE

**230**

· ORDER MANAGEMENT NUMBER
· PATIENT MANAGEMENT NUMBER
· LENS DESIGN DATA
  (LENS POWER
  AND FITTING DATA)

**210**

LENS MANUFACTURER

**240**

· ORDER MANAGEMENT NUMBER
· LENS DESIGN DATA
· EYE DATA

· ORDER MANAGEMENT NUMBER
· ACTUAL LENS POWER

| PATIENT MANAGEMENT NUMBER | ORDER DATA D1 | | | LENS POWER DATA D2 |
| | ORDER MANAGEMENT NUMBER | EYE DATA | LENS DESIGN DATA | |
| 0001 | ORDER01 | EYE SHAPE AND STATE OF VISUAL FIELD | LENS POWER AND FITTING DATA | ACTUAL LENS POWER |
| ⋮ | ⋮ | ⋮ | ⋮ | ⋮ |

EP 4 020 063 A1

FIG. 22

SERVER DEVICE ~210

CPU ~211

EYE DATA RECEPTION UNIT ~212

LENS DESIGN DATA RECEPTION UNIT ~213

ORDER DATA TRANSMISSION UNIT ~214

LENS POWER RECEPTION UNIT ~215

LENS POWER TRANSMISSION UNIT ~216

STORAGE MEDIUM ~219

FIG. 23

EP 4 020 063 A1

FIG. 24

**INTERNATIONAL SEARCH REPORT**

| International application No. |
| --- |
| PCT/JP2020/026386 |

| A. CLASSIFICATION OF SUBJECT MATTER |
| --- |
| Int.Cl. G02C7/02(2006.01)i, G02C13/00(2006.01)i, G06Q30/06(2012.01)i<br>FI: G02C7/02, G06Q30/06320, G02C13/00 |
| According to International Patent Classification (IPC) or to both national classification and IPC |

| B. FIELDS SEARCHED |
| --- |
| Minimum documentation searched (classification system followed by classification symbols)<br>Int.Cl. G02C7/02, G02C13/00, G06Q30/06 |
| Documentation searched other than minimum documentation to the extent that such documents are included in the fields searched<br>Published examined utility model applications of Japan      1922-1996<br>Published unexamined utility model applications of Japan    1971-2020<br>Registered utility model specifications of Japan            1996-2020<br>Published registered utility model applications of Japan    1994-2020 |
| Electronic data base consulted during the international search (name of data base and, where practicable, search terms used) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| P, Y | WO 2020/004620 A1 (HOYA CORPORATION) 02.01.2020 (2020-01-02), paragraph [0113] | 1-7 |
| Y | JP 2016-180989 A (PERFECT VISION TECHNOLOGY (HK) LTD.) 13.10.2016 (2016-10-13), paragraph [0043] | 1-7 |
| Y | WO 2016/056649 A1 (HOYA LENS THAILAND LTD.) 14.04.2016 (2016-04-14), paragraphs [0075], [0076] | 1-7 |
| Y | WO 2015/053210 A1 (TOKAI OPTICAL CO., LTD.) 16.04.2015 (2015-04-16), paragraph [0021] | 1-7 |
| Y | JP 2016-500024 A (PERFECT VISION TECHNOLOGY (HK) LTD.) 07.01.2016 (2016-01-07), paragraph [0060] | 1-7 |

☒ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>25.09.2020 | Date of mailing of the international search report<br>06.10.2020 |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2020/026386

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2013/132752 A1 (HOYA LENS MANUFACTURING PHILIPPINES INC.) 12.09.2013 (2013-09-12), paragraph [0084] | 1-7 |
| Y | JP 2013-076740 A (SEIKO EPSON CORPORATION) 25.04.2013 (2013-04-25), paragraphs [0025], [0046] | 1-7 |
| Y | JP 2013-539080 A (CARL ZEISS VISION INTERNATIONAL GMBH) 17.10.2013 (2013-10-17), paragraph [0055] | 1-7 |
| Y | JP 2003-215507 A (PENTAX CORPORATION) 30.07.2003 (2003-07-30), examples | 1-7 |
| Y | JP 64-050012 A (ASAHI GLASS CO., LTD.) 27.02.1989 (1989-02-27), claim 1, page 2, upper left column, lines 16-18, page 3, lower left column, lines 19, 20 | 1-7 |
| Y | JP 52-115242 A (AMERICAN OPTICAL CORP.) 27.09.1977 (1977-09-27), page 2, lower left column, lines 8, 9 | 1-7 |
| Y | JP 2008-299168 A (TOKAI OPTICAL CO., LTD.) 11.12.2008 (2008-12-11), paragraph [0010] | 1-7 |
| P, Y | JP 2019-211543 A (ITO KOGAKU KOGYO KK) 12.12.2019 (2019-12-12), paragraph [0039] | 1-7 |
| Y | WO 2014/133167 A1 (HOYA CORPORATION) 04.09.2014 (2014-09-04), paragraphs [0142]-[0145] | 1-7 |
| Y | JP 2014-530638 A (HOYA CORPORATION) 20.11.2014 (2014-11-20), paragraph [0038] | 1-7 |
| Y | WO 2003/057038 A1 (VISION MEGANE KK) 17.07.2003 (2003-07-17), page 26, lines 36-40 | 1-7 |
| X Y | JP 2018-169432 A (TOPCON ESSILOR JAPAN CO., LTD.) 01.11.2018 (2018-11-01), paragraphs [0015], [0016], [0019], [0020], [0022], [0024], [0031] | 8-14 8-14 |
| Y | WO 2015/125868 A1 (NIKON CORPORATION) 27.08.2015 (2015-08-27), paragraphs [0075]-[0077] | 8-14 |
| Y | JP 2007-156208 A (TOKAI OPTICAL CO., LTD.) 21.06.2007 (2007-06-21), paragraph [0018] | 8-14 |
| A | JP 2017-151452 A (ESSILOR INTERNATIONAL (COMPAGNIE GENERALE D'OPTIQUE)) 31.08.2017 (2017-08-31), entire text, all drawings | 8-14 |

Form PCT/ISA/210 (second sheet) (January 2015)

**INTERNATIONAL SEARCH REPORT**

International application No.

PCT/JP2020/026386

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-014305 A (MEGASAACHI KK) 18.01.2002 (2002-01-18), entire text, all drawings | 8-14 |
| A | WO 2011/115119 A1 (NIKON CORPORATION) 22.09.2011 (2011-09-22), entire text, all drawings | 8-14 |
| A | JP 2011-508274 A (ESSILOR INTERNATIONAL (COMPAGNIE GENERALE D'OPTIQUE)) 10.03.2011 (2011-03-10), entire text, all drawings | 8-14 |

Form PCT/ISA/210 (second sheet) (January 2015)

**INTERNATIONAL SEARCH REPORT**

International application No.

PCT/JP2020/026386

| **Box No. II** | **Observations where certain claims were found unsearchable (Continuation of item 2 of first sheet)** |

This international search report has not been established in respect of certain claims under Article 17 (2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| **Box No. III** | **Observations where unity of invention is lacking (Continuation of item 3 of first sheet)** |

This International Searching Authority found multiple inventions in this international application, as follows:

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet) (January 2015)

EP 4 020 063 A1

| INTERNATIONAL SEARCH REPORT | International application No. |
| --- | --- |
| | PCT/JP2020/026386 |

**Box No. III**      **Observations where unity of invention is lacking (Continuation of item 3 of first sheet)**

This International Searching Authority found multiple inventions in this international application, as follows:

(Invention 1) Claims 1-7
    Claims 1-7 have a special technical feature as defined in claim 1, and thus are classified as invention 1.
(Invention 2) Claims 8-10
    Claims 8-10 do not have any common technical features between these claims and claim 1 classified as invention 1. In addition, there are not the same or corresponding special technical features between these inventions. Furthermore, claims 8-10 do not depend from claim 1. In addition, claims 8-10 are not substantially identical to or similarly closely related to any of the claims classified as invention 1.
    Accordingly claims 8-10 cannot be identified as invention 1.
    Meanwhile, claims 8-10 have a special technical feature as defined in claim 8, and thus are classified as invention 2.
(Invention 3) Claims 11-14
    Claims 11-14 do not have any common technical features between these claims and claim 1 classified as invention 1. In addition, there are not the same or corresponding special technical features between these inventions. Claims 11-14 relate to a terminal device that is installed in a spectacle store, and claim 8 classified as invention 2 relates to a server device; thus the inventions do not have any common technical features therebetween. Aside from using different mediums, the inventions have the common technical feature therebetween of transmitting lens design data associated with a patient management number. It is clear however that such a technical feature does not make a contribution over the prior art, and thus the technical feature cannot be considered a special technical feature. Apart from this feature, there are not the same or corresponding special technical features between these inventions.
    Furthermore, claims 11-14 do not depend from claim 1 or 8. In addition, claims 11-14 are not substantially identical to or similarly closely related to any of the claims classified as invention 1 or 2.
    Meanwhile, claims 11-14 have a special technical feature as defined in claim 11, and thus are classified as invention 3.

Form PCT/ISA/210 (continuation of first sheet) (January 2015)

INTERNATIONAL SEARCH REPORT
Information on patent family members

International application No.

PCT/JP2020/026386

```
WO 2020/004620 A1  02.01.2020    (Family: none)

JP 2016-180989 A   13.10.2016    US 2011/0228225 A1
                                 paragraph [0050]
                                 WO 2010/065475 A2
                                 EP 3269296 A1
                                 CN 102307514 A

WO 2016/056649 A1  14.04.2016    US 2017/0293159 A1
                                 paragraphs [0142]-[0144]
                                 EP 3206078 A1
                                 CN 107003544 A

WO 2015/053210 A1  16.04.2015    US 2017/0293159 A1
                                 paragraph [0122]
                                 EP 3206078 A1
                                 CN 107003544 A

JP 2016-500024 A   07.01.2016    US 2013/0100410 A1
                                 paragraph [0070]
                                 WO 2010/065475 A2
                                 EP 3269296 A1
                                 CN 105378547 A

WO 2013/132752 A1  12.09.2013    US 2015/0077703 A1
                                 paragraph [0139]
                                 EP 2824503 A1
                                 CN 104160322 A1
                                 JP 2013-182248 A

JP 2013-076740 A   25.04.2013    US 2014/0240662 A1
                                 paragraphs [0065], [0149]
                                 WO 2013/046677 A1
                                 EP 2762952 A1
                                 CN 103842891 A

JP 2013-539080 A   17.10.2013    US 2013/0271724 A1
                                 paragraph [0058]
                                 WO 2012/042030 A1
                                 DE 102010047846 A
                                 CN 103380395 A

JP 2003-215507 A   30.07.2003    (Family: none)

JP 64-050012 A     27.02.1989    (Family: none)

JP 52-115242 A     27.09.1977    GB 1571930 A
                                 DE 2707601 A
                                 CA 1077315 A
```

Form PCT/ISA/210 (patent family annex) (January 2015)

INTERNATIONAL SEARCH REPORT
Information on patent family members

International application No.

PCT/JP2020/026386

```
JP 2008-299168 A    11.12.2008    (Family: none)

JP 2019-211543 A    12.12.2019    (Family: none)

WO 2014/133167 A1   04.09.2014    US 2016/0026001 A1
                                  paragraphs [0240]-[0246]
                                  WO 2014/133166 A1
                                  EP 2963482 A1
                                  AU 2014221656 A
                                  CN 105008987 A
                                  AU 2014221655 A

JP 2014-530638 A    20.11.2014    US 2014/0303725 A1
                                  paragraph [0073]
                                  WO 2013/018379 A1
                                  AU 2012291464 A

WO 2003/057038 A1   17.07.2003    JP 4057531 B
                                  US 2005/0073648 A1
                                  paragraph [0366]
                                  EP 1468649 A1
                                  CA 2472384 A
                                  AU 2003202466 A
                                  TW 200304606 A
                                  CN 1612714 A

JP 2018-169432 A    01.11.2018    (Family: none)

WO 2015/125868 A1   27.08.2015    US 2017/0045755 A1
                                  paragraphs [0111]-[0113]
                                  EP 3109693 A

JP 2007-156208 A    21.06.2007    (Family: none)

JP 2017-151452 A    31.08.2017    US 2014/0293218 A1
                                  WO 2013/064582 A2
                                  EP 2590114 A1
                                  AU 2012331139 A
                                  CA 2853612 A
                                  CN 104025132 A
                                  KR 10-2014-0088534 A
                                  IN 828MUN2014 A
                                  BR 112014010413 A

JP 2002-014305 A    18.01.2002    (Family: none)

WO 2011/115119 A1   22.09.2011    JP 2011-192189 A
                                  US 2013/0006814 A1
                                  CN 102792329 A
```

Form PCT/ISA/210 (patent family annex) (January 2015)

| INTERNATIONAL SEARCH REPORT<br>Information on patent family members | International application No.<br>PCT/JP2020/026386 |

| JP 2011-508274 A | 10.03.2011 | US 2010/0293251 A1<br>WO 2009/065964 A1<br>EP 2031434 A1<br>CA 2710593 A |

Form PCT/ISA/210 (patent family annex) (January 2015)

**EP 4 020 063 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019175625 A
- JP 2017058632 A
- JP 6209722 B
- JP 4824031 B

**Non-patent literature cited in the description**

- *Investigative ophthalmology & Visual Science (IO-VS),* May 2013, vol. 54 (5), 3594-3599
- Survey of Optical Instruments. Handbook of Optical Systems. vol. 4